(19) Europäisches Patentamt
European Patent Office
Office européen des brevets

(11) **EP 4 783 596 A1**

(12) **EUROPEAN PATENT APPLICATION**
published in accordance with Art. 153(4) EPC

(43) Date of publication:
**29.07.2026 Bulletin 2026/31**

(21) Application number: **24888924.8**

(22) Date of filing: **20.09.2024**

(51) International Patent Classification (IPC):
*H04N 23/55* (2023.01)       *H04N 23/54* (2023.01)
*G03B 17/12* (2021.01)       *G02B 13/00* (2006.01)
*G02B 15/14* (2006.01)

(52) Cooperative Patent Classification (CPC):
G02B 13/00; G02B 15/14; G03B 17/12;
H04N 23/54; H04N 23/55

(86) International application number:
**PCT/KR2024/014177**

(87) International publication number:
**WO 2025/100728 (15.05.2025 Gazette 2025/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.11.2023 KR 20230153658**
**14.11.2023 KR 20230157497**

(71) Applicant: **Samsung Electronics Co., Ltd.
Suwon-si, Gyeonggi-do 16677 (KR)**

(72) Inventors:
• **SEO, Jinseon
Suwon-si Gyeonggi-do 16677 (KR)**
• **BAE, Jaecheol
Suwon-si Gyeonggi-do 16677 (KR)**

(74) Representative: **HGF
HGF Limited
4th Floor, 1 City Square
Leeds LS1 2ES (GB)**

(54) **IMAGING DEVICE AND ELECTRONIC DEVICE COMPRISING SAME**

(57)     According to one embodiment of the present disclosure, an imaging device may comprise: an image sensor; and a lens assembly including at least six lenses sequentially aligned along an optical axis from a first lens, which is farthest from the image sensor, so as to focus or guide light to the image sensor. In one embodiment, the lens assembly or the at least six lenses can comprise: a first lens having positive refractive power, a second lens, which is disposed between the first lens and the image sensor and has negative refractive power; a third lens, which is disposed between the second lens and the image sensor and has positive refractive power; a fourth lens, which is disposed between the third lens and the image sensor and has negative refractive power, a fifth lens, which is disposed between the fourth lens and the image sensor and has positive refractive power, and a sixth lens, which is disposed between the fifth lens and the image sensor and has negative refractive power. In one embodiment, the lens assembly can be easily miniaturized while providing optical performance suitable for a large/high-pixel image sensor by satisfying at least some of the conditions disclosed in the present document. Other various embodiments are possible.

FIG.5

## Description

[Technical Field]

Embodiment(s) of the disclosure relate to an image capturing device and, for example, to an image capturing device including a plurality of lenses and an electronic device including the same.

[Background Art]

Optical devices, for example, cameras capable of capturing images or videos, have been widely used, and recently, digital cameras or video cameras having solid-state image sensors such as a charge coupled device (CCD) or a complementary metal-oxide semiconductor (CMOS) have become common. An optical device employing a solid-state image sensor (CCD or CMOS) is gradually replacing a film-type optical device because it is easier to store, duplicate, and move images compared to the film-type optical device.

Recently, two or more selected from a plurality of optical devices, for example, a macro camera, a telephoto camera, and/or a wide-angle camera are mounted on a single electronic device to improve the quality of a captured image and provide various visual effects to the captured image. For example, a high-quality captured image may be obtained by obtaining subject images through a plurality of cameras having different optical characteristics and synthesizing them. As high-quality captured images are obtained by mounting a plurality of optical devices (e.g., cameras), electronic devices such as mobile communication terminals or smartphones are gradually replacing electronic devices specialized for a photographing function, such as digital compact cameras, and are expected to be able to replace high-performance cameras such as digital single-lens reflex (DSLR) cameras in the future.

The above information is presented as related art only to assist with an understanding of the disclosure. No determination has been made, and no assertion is made, as to whether any of the above might be applicable as prior art with regard to the disclosure.

[Detailed Description of the Invention]

[Technical Solution]

According to an embodiment of the disclosure, an image capturing device may include an image sensor, and a lens assembly configured to focus or guide light to the image sensor by including at least six lenses sequentially aligned along an optical axis from a first lens farthest from the image sensor. In an embodiment, the lens assembly or the at least six lenses may include the first lens having a meniscus shape convex toward a subject side and having a positive refractive power, a second lens disposed between the first lens and the image sensor, having a meniscus shape convex toward the subject side, and having a negative refractive power, a third lens disposed between the second lens and the image sensor and having a positive refractive power, a fourth lens disposed between the third lens and the image sensor and having a negative refractive power, a fifth lens disposed between the fourth lens and the image sensor, having a biconvex shape in a chief region intersecting the optical axis, and having a positive refractive power, and a sixth lens disposed between the fifth lens and the image sensor and having a negative refractive power. In an embodiment, the lens assembly may satisfy the following [Conditional Expressions 1, 2, and 3].

$$[\text{Conditional Expression 1}]$$

$$5.9\text{mm} =< f*\tan(\text{semi-FOV}) =< 6.5\text{mm}$$

$$[\text{Conditional Expression 2}]$$

$$0.55 =< \text{OAL}/(\text{ImgH}*2) =< 0.64$$

$$[\text{Conditional Expression 3}]$$

$$1 =< \text{SA}/\text{L5S1ape} =< 1.4$$

(where 'f' is a focal length of the lens assembly, 'semi-FOV' is a half field of view of the lens assembly, 'OAL' is a distance from a subject-side surface of the first lens to the image sensor, measured on the optical axis, 'ImgH' is a maximum image height of the image sensor, and 'SA' is a distance from the subject-side surface of the first lens to a subject-side surface of the fifth lens, measured on the optical axis, and 'L5S1ape' is a half-aperture size of the subject-side surface of the fifth lens).

According to an embodiment, an electronic device may include an image sensor, a lens assembly configured to focus or guide light to the image sensor by including at least six lenses sequentially aligned along an optical axis from a first lens farthest from the image sensor, and a processor configured to obtain a subject image using the image sensor. In an embodiment, the lens assembly or the at least six lenses may include the first lens having a meniscus shape convex toward a subject side and having a positive refractive power, a second lens disposed between the first lens and the image sensor, having a meniscus shape convex toward the subject side, and having a negative refractive power, a third lens disposed between the second lens and the image sensor and having a positive refractive power, a fourth lens disposed between the third lens and the image sensor and having a negative refractive power, a fifth lens disposed between the fourth lens and the image sensor, having a biconvex shape in a chief region intersecting the optical axis, and having a positive refractive power, and a sixth lens disposed between the fifth lens and the image sensor and having a negative refractive power. In an embodiment, the lens assembly may satisfy the following [Conditional Expressions 1, 2, and 3].

$$[\text{Conditional Expression 1}]$$

$$5.9\text{mm} =< f*\tan(\text{semi-FOV}) =< 6.5\text{mm}$$

$$[\text{Conditional Expression 2}]$$

$$0.55 =< \text{OAL}/(\text{ImgH}*2) =< 0.64$$

$$[\text{Conditional Expression 3}]$$

$$1 =< \text{SA}/\text{L5S1ape} =< 1.4$$

(where 'f' is a focal length of the lens assembly, 'semi-FOV' is a half field of view of the lens assembly, 'OAL' is a distance from a subject-side surface of the first lens to the image sensor, measured on the optical axis, 'ImgH' is a maximum image height of the image sensor, and 'SA' is a distance from the subject-side surface of the first lens to a subject-side surface of the fifth lens, measured on the optical axis, and 'L5S1ape' is a half-aperture size of the subject-side surface of the fifth lens).

[Brief Description of Drawings]

The above or other aspects, configurations, and/or advantages of an embodiment of the disclosure may become more apparent through the following detailed description with reference to the accompanying drawings.

FIG. 1 is a block diagram illustrating an electronic device in a network environment according to an embodiment of the disclosure.
FIG. 2 is a block diagram illustrating a camera module according to an embodiment of the disclosure.
FIG. 3 is a perspective view illustrating a front surface of an electronic device according to an embodiment of the disclosure.
FIG. 4 is a perspective view illustrating a rear surface of the electronic device illustrated in FIG. 3, according to an embodiment of the disclosure.
FIG. 5 is a diagram illustrating an image capturing device and/or a lens assembly according to an embodiment of the disclosure.
FIG. 6 is a graph illustrating spherical aberration of the lens assembly of FIG. 5 according to an embodiment of the disclosure.
FIG. 7 is a graph illustrating astigmatism of the lens assembly of FIG. 5 according to an embodiment of the disclosure.
FIG. 8 is a graph illustrating distortion of the lens assembly of FIG. 5 according to an embodiment of the disclosure.
FIG. 9 is a diagram illustrating an image capturing device and/or a lens assembly according to an embodiment of the disclosure.
FIG. 10 is a graph illustrating spherical aberration of the lens assembly of FIG. 9 according to an embodiment of the disclosure.
FIG. 11 is a graph illustrating astigmatism of the lens assembly of FIG. 9 according to an embodiment of the disclosure.
FIG. 12 is a graph illustrating distortion of the lens assembly of FIG. 9 according to an embodiment of the disclosure.
FIG. 13 is a diagram illustrating an image capturing device and/or a lens assembly according to an embodiment of the disclosure.

FIG. 14 is a graph illustrating spherical aberration of the lens assembly of FIG. 13 according to an embodiment of the disclosure.

FIG. 15 is a graph illustrating astigmatism of the lens assembly of FIG. 13 according to an embodiment of the disclosure.

FIG. 16 is a graph illustrating distortion of the lens assembly of FIG. 13 according to an embodiment of the disclosure.

FIG. 17 is a diagram illustrating an image capturing device and/or a lens assembly according to an embodiment of the disclosure.

FIG. 18 is a graph illustrating spherical aberration of the lens assembly of FIG. 17 according to an embodiment of the disclosure.

FIG. 19 is a graph illustrating astigmatism of the lens assembly of FIG. 17 according to an embodiment of the disclosure.

FIG. 20 is a graph illustrating distortion of the lens assembly of FIG. 17 according to an embodiment of the disclosure.

Throughout the accompanying drawings, similar reference numerals may be assigned to similar parts, components, and/or structures.

[Mode for Carrying out the Invention]

As electronic devices become increasingly miniaturized, the conditions for ensuring optical performance while mounting image capturing devices such as cameras in these miniaturized devices are becoming progressively challenging. For example, while it may be easier to improve the optical performance of an image capturing device as the number and size of lenses increase, there are limitations on the number and size of lenses when mounting them in miniaturized electronic devices. As user demand for more advanced optical performance increases, the performance of image sensors is improving through a pixel count or a size (e.g., image height), but it may be increasingly difficult to miniaturize a lens assembly that matches such image sensor performance.

An embodiment of the disclosure is to address at least the above-mentioned problems and/or disadvantages and to provide at least the advantages described below, and may provide an image capturing device having optical performance suitable for a high-pixel and/or large-sized image sensor, and/or an electronic device including the same.

An embodiment of the disclosure may provide an image capturing device that is miniaturized while having optical performance suitable for a high-pixel and/or large-sized image sensor, and/or an electronic device including the same.

The technical objects to be achieved by the disclosure are not limited to the technical objects mentioned above, and other technical objects not mentioned will be clearly understood by those skilled in the art from the following description.

The following description of the accompanying drawings may provide an understanding of various exemplary implementations of the disclosure, including the claims and equivalents thereof. Although an exemplary embodiment disclosed in the following description includes various specific details to aid understanding, these are considered to be merely one of various exemplary embodiments. Accordingly, those skilled in the art will understand that various changes and modifications may be made to various implementations described herein without departing from the scope and spirit of the disclosure. Additionally, a description of well-known functions and configurations will be avoided for clarity and conciseness.

The terms and words used in the following description and claims are not limited to their bibliographical meanings but may be used to clearly and consistently describe an embodiment of the disclosure. Therefore, it will be apparent to those skilled in the art that the following description of various implementations of the disclosure is provided for illustration purposes only and not for the purpose of limiting the disclosure as defined by the scope of the claims and their equivalents.

It should be understood that the singular forms "a," "an," and "the" include plural referents unless the context clearly dictates otherwise. Thus, for example, a reference to "a component surface" may be understood as including one or more surfaces of the component.

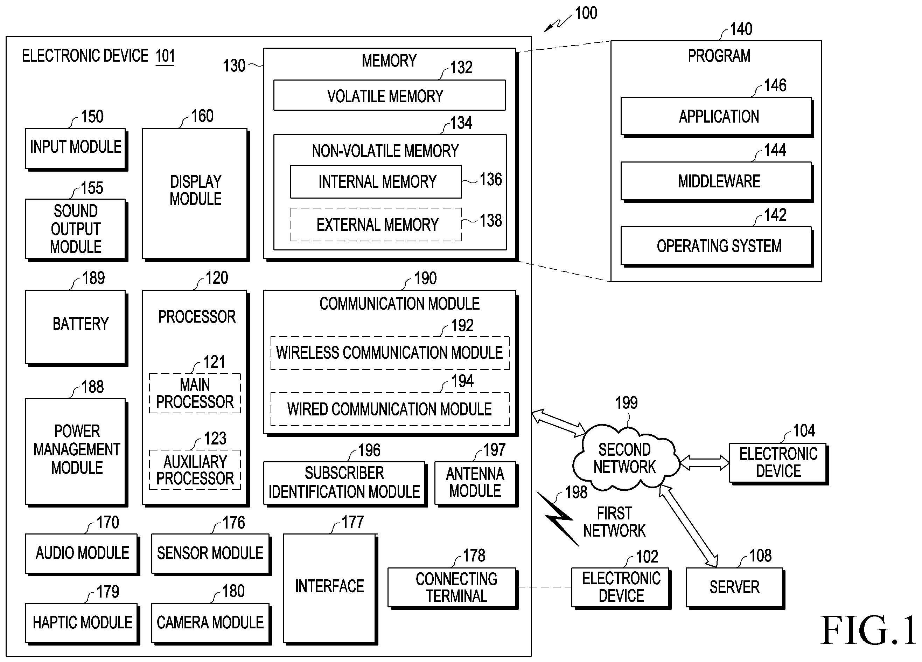

FIG. 1 is a block diagram illustrating an electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one of the components (e.g., the connecting terminal 178) may be omitted from the electronic device 101, or one or more other components may be added in the electronic device 101. In an embodiment, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

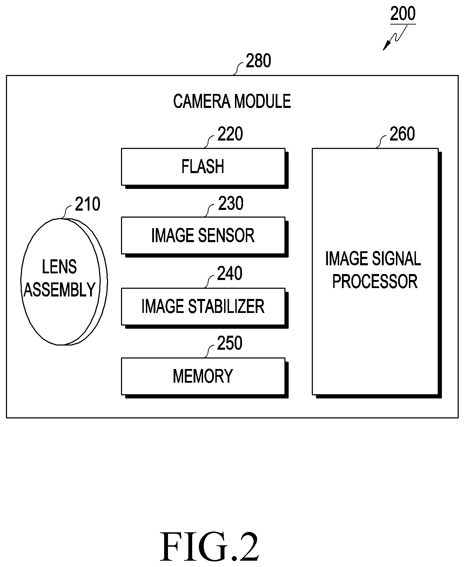

FIG. 2 is a block diagram 200 illustrating a camera module 280 (e.g., the camera module 180 in FIG. 1) according to an embodiment of the disclosure. Referring to FIG. 2, the camera module 280 may include a lens assembly 210, a flash 220, an image sensor 230, an image stabilizer 240, memory 250 (e.g., buffer memory), or an image signal processor 260. In an embodiment, the lens assembly 210 may include the image sensor 230. The lens assembly 210 may collect light emitted from an object whose image is to be taken. The lens assembly 210 may include one or more lenses. According to an embodiment, the camera module 280 may include a plurality of lens assemblies 210. In such a case, the camera module 280 may form, for example, a dual camera, a 360-degree camera, or a spherical camera. Some of the plurality of lens assemblies 210 may have the same lens attribute (e.g., view angle, focal length, auto-focusing, F-number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 280 or an electronic device 201 including the camera module 280. This allows compensating for at least part of a negative effect by the movement on an image being captured. According to an embodiment, the image stabilizer 240 may sense such a movement by the camera module 280 or an electronic device (e.g., the electronic device 101 in FIG. 1) using a gyro sensor (not shown) or an acceleration sensor (not shown) disposed inside or outside the camera module 280. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160 of FIG. 1. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of a memory (e.g., the memory 130 in FIG. 1) or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 280. An image processed by the image signal processor 260 may be stored back in the memory 250 for further processing, or may be provided to an external component (e.g., the memory 130, the display module 160, the electronic device 102, the electronic device 104, or the server 108 in FIG. 1) outside the camera module 280. According to an embodiment, the image signal processor 260 may be configured as at least part of a processor (e.g., the processor 120 in FIG. 1), or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, an electronic device (e.g., the electronic device 101 in FIG. 1) may include a plurality of camera modules 280 having different attributes or functions. In such a case, at least one of the plurality of camera modules 280 may form, for example, a wide-angle camera and at least another of the plurality of camera modules 280 may form a telephoto camera. Similarly, at least one of the plurality of camera modules 280 may form, for example, a front camera and at least another of the plurality of camera modules 280 may form a rear camera.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiment(s) of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) including one or more instructions that are stored in a storage medium (e.g., internal memory or external memory) that is readable by a machine (e.g., an electronic device). For example, a processor (e.g., a processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

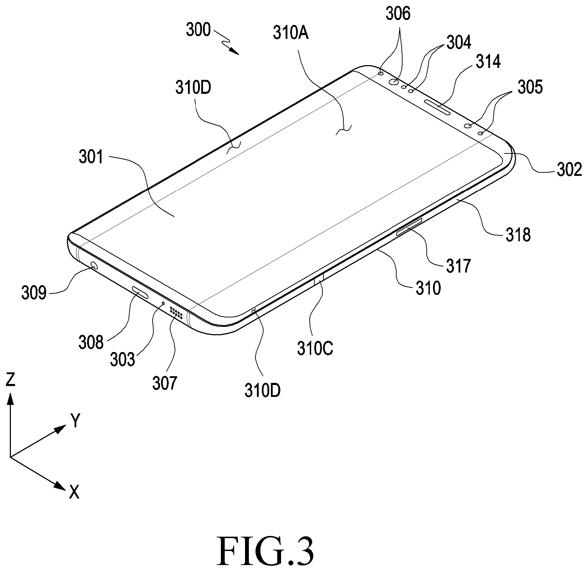

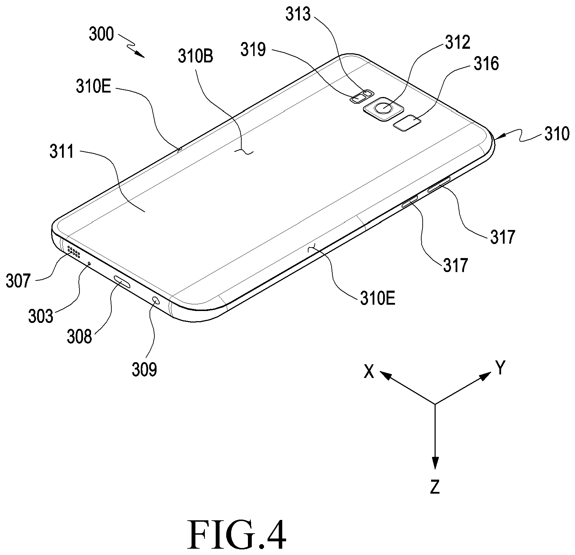

FIG. 3 is a perspective view illustrating a front surface of an electronic device 300 (e.g., the electronic device 101 of FIG. 1) according to an embodiment of the disclosure. FIG. 4 is a perspective view illustrating a rear surface of the electronic device 300 illustrated in FIG. 3 according to an embodiment of the disclosure.

Referring to FIGS. 3 and 4, the electronic device 300 (e.g., the electronic device 101 of FIG. 1) according to an embodiment may include a housing 310 which includes a first surface (front surface) 310A, a second surface (rear surface) 310B, and a side surface 310C surrounding a space between the first surface 310A and the second surface 310B. In an embodiment (not shown), the housing 310 may refer to a structure that forms a portion of the first surface 310A of FIG. 3, the second surface 310B of FIG. 4, and the side surfaces 310C. According to an embodiment, at least a portion of the first surface 310A may be formed by a front plate 302 (e.g., a glass plate or polymer plate including various coating layers) which is at least partially substantially transparent. In an embodiment, the front plate 302 may be coupled to the housing 310 to form an internal space together with the housing 310. In an embodiment, the term 'internal space' may refer to an internal space of the housing 310 for accommodating at least a portion of a display 301 to be described later or the display module 160 of FIG. 1.

According to an embodiment, the second surface 310B may be formed by a rear plate 311. The rear plate 311 may be formed of, for example, coated or tinted glass, ceramic, a polymer, a metal (e.g., aluminum, stainless steel (STS), or magnesium), or a combination of at least two of these materials. The side surface 310C may be coupled to the front plate 302 and the rear plate 311 and formed by a side bezel structure (or "side member") 318 including a metal and/or a polymer. In an embodiment, the rear plate 311 and the side bezel structure 318 may be integrally formed and include the same material (e.g., a metal material such as aluminum).

In the illustrated embodiment, the front plate 302 may include two first areas 310D, which are bent and extend seamlessly from the first surface 310A toward the rear plate 311, at both long edge ends of the front plate 302. In the illustrated embodiment (see FIG. 4), the rear plate 311 may include two second areas 310E, which are bent and extend seamlessly from the second surface 310B toward the front plate 302, at both long edge ends of the rear plate 311. In an embodiment, the front plate 302 (or the rear plate 311) may include only one of the first areas 310D (or the second areas 310E). In an embodiment, some of the first areas 310D or the second areas 310E may not be included. In the embodiments, when viewed from the sides of the electronic device 101, the side bezel structure 318 may have a first thickness (or width) on a side surface that does not include any of the above first areas 310D or second areas 310E (e.g., a side surface on which a connector hole 308 is formed), and a second thickness less than the first thickness on a side surface that includes the above first areas 310D or second areas 310E (e.g., a side surface on which a key input device 317 is disposed).

According to an embodiment, the electronic device 300 may include at least one of the display 301, audio modules 303, 307, sensor modules 304, 316, and 319, camera modules 305, 312, and 313 (e.g., the camera module 180 or 280 in FIG. 1 or FIG. 2), key input devices 317, or connector holes 308 and 309. In an embodiment, the electronic device 300 may not be provided with at least one (e.g., the key input devices 317 or a light emitting element 306) of the components or may additionally include other components.

The display 301 (e.g., the display module 160 of FIG. 1) may be visually exposed, for example, through a substantial portion of the front plate 302. In an embodiment, at least a portion of the display 301 may be exposed through the first surface 310A and the front plate 302 which forms the first areas 310D of the side surface 310C. In an embodiment, a corner of the display 301 may be formed substantially in the same shape as that of an adjacent periphery of the front plate 302. In an embodiment (not shown), a gap between the periphery of the display 301 and the periphery of the front plate 302 may be substantially equal to increase the visually exposed area of the display 301.

In an embodiment (not shown), a recess or an opening may be formed in a portion of the screen display area (e.g., active area) or an area (e.g., inactive area) outside the screen display area, and at least one of the audio module 314 (e.g., the audio module 170 of FIG. 1), the sensor module 304 (the sensor module 176 of FIG. 1), the camera module 305, or the light emitting element 306, which is aligned with the recess or the opening, may be included. In an embodiment (not shown), at least one of the audio module 314, the sensor module 304, the camera modules 305 (e.g., under display camera (UDC)), a fingerprint sensor 316, or the light emitting element 306 may be included on a rear surface of the screen display area of the display 301. In an embodiment (not shown), the display 301 may be incorporated with or disposed adjacent to a touch sensing circuit, a pressure sensor capable of measuring the intensity (pressure) of a touch, and/or a digitizer that detects a magnetic field-based stylus pen. In an embodiment, at least some of the sensor modules 304 and 319 and/or at least some of the key input devices 317 may be disposed in the first areas 310D and/or the second areas 310E.

The audio modules 303, 307, and 314 may include a microphone hole 303 and speaker holes 307 and 314. A microphone for obtaining an external sound may be disposed in the microphone hole 303, and in an embodiment, a plurality of microphones may be disposed to detect the direction of a sound. The speaker holes 307 and 314 may include an external speaker hole 307 and a receiver hole 314 for calls. In an embodiment, the speaker holes 307 and 314 and the microphone hole 303 may be implemented as a single hole, or a speaker (e.g., a piezo speaker) may be included without the speaker holes 307 and 314.

The sensor modules 304, 316, and 319 may generate an electrical signal or data value corresponding to an internal operating state or external environmental state of the electronic device 300. The sensor modules 304, 316, and 319 may include, for example, a first sensor module 304 (e.g., a proximity sensor) and/or a second sensor module (not shown) (e.g., a fingerprint sensor), disposed on the first surface 310A of the housing 310, and/or a third sensor module 319 (e.g., a HRM sensor) and/or a fourth sensor module 316 (e.g., a fingerprint sensor), disposed on the second surface 310B of the housing 310. The fingerprint sensors may be disposed on the second surface 310B as well as on the first surface 310A (e.g., the display 301) of the housing 310. The electronic device 300 may further include a sensor module which is not shown, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 305, 312, and 313 may include a front camera module 305 disposed on the first surface 310A of the electronic device 300, and a rear camera module 312 and/or a flash 313 disposed on the second surface 310B. The camera modules 305 and 312 may include one or more lenses, an image sensor, and/or an image signal processor. The flash 313 may include, for example, a light emitting diode (LED) or a xenon lamp. In an embodiment, two or more lenses (an IR camera, a wide-angle lens, and a telephoto lens) and image sensors may be arranged on one surface of the electronic device 300.

The key input devices 317 may be disposed on the side surface 310C of the housing 310. In an embodiment, the electronic device 300 may not include some or any of the key input devices 317, and the key input devices 317 which are not included may be implemented in other forms such as soft keys on the display 301. In an embodiment, the key input devices may include the sensor module 316 disposed on the second surface 310B of the housing 310.

The light emitting element 306 may be disposed, for example, on the first surface 310A of the housing 310. The light emitting element 306 may provide, for example, state information about the electronic device 300 in the form of light. In an embodiment, the light emitting element 306 may provide, for example, a light source interworking with an operation of the front camera module 305. The light emitting element 306 may include, for example, an LED, an IR LED, and a xenon lamp.

The connector holes 308 and 309 may include a first connector hole 308 capable of accommodating a connector (e.g., a USB connector) for transmitting and receiving power and/or data to and from an external electronic device and/or a second connector hole (e.g., an earphone jack) 309 capable of accommodating a connector for transmitting and receiving an audio signal to and from an external electronic device.

In describing the following embodiments, reference may be made to the electronic devices 101, 102, 104, and 300 and/or the camera modules 180, 280, 305, 312, and 313 of the above-described embodiments. Image capturing devices 400, 500, 600, and 700 in embodiments described below may implement part or the entirety of at least one of the above-described camera modules 180, 280, 305, 312, and 313.

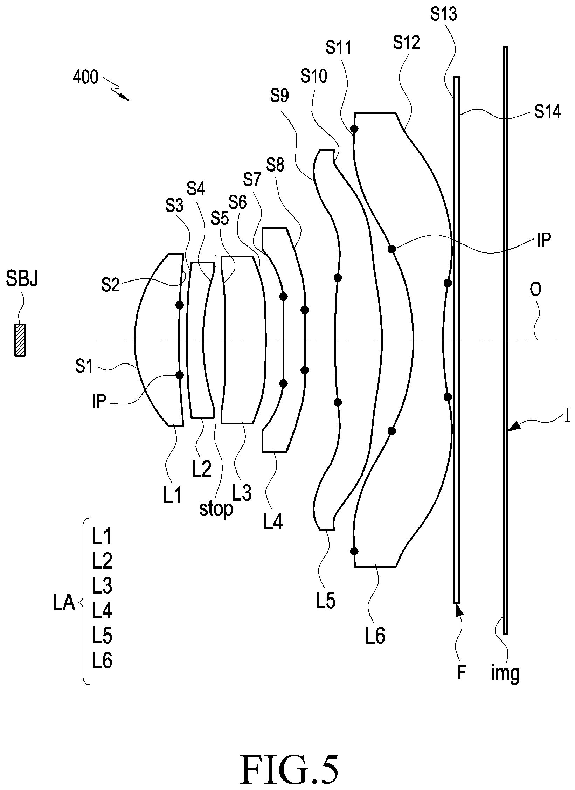

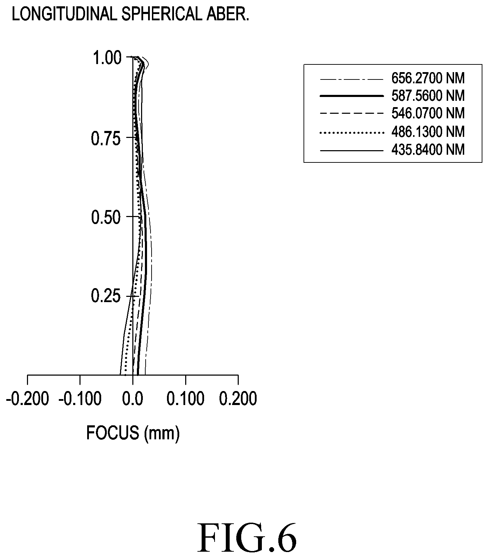

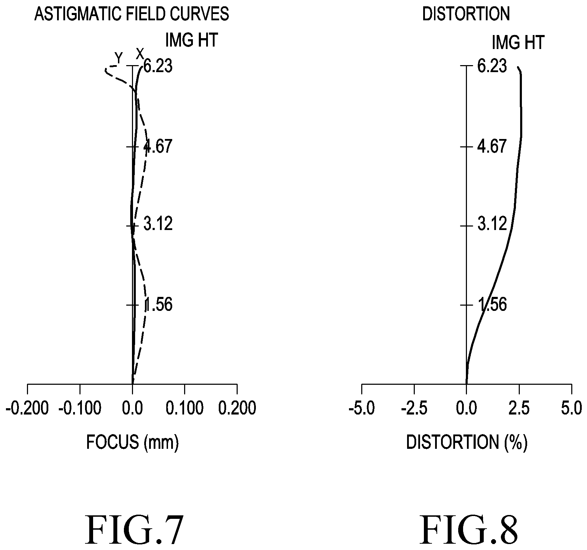

FIG. 5 is a diagram illustrating the image capturing device 400 and/or a lens assembly LA according to an embodiment of the disclosure. FIG. 6 is a graph illustrating spherical aberration of the lens assembly LA of FIG. 5 according to an embodiment of the disclosure. FIG. 7 is a graph illustrating astigmatism of the lens assembly LA of FIG. 5 according to an embodiment of the disclosure. FIG. 8 is a graph illustrating distortion of the lens assembly LA of FIG. 5 according to an embodiment of the disclosure.

FIG. 6 is a graph illustrating the spherical aberration of the image capturing device 400 and/or the lens assembly LA according to an embodiment of the disclosure, in which a horizontal axis represents coefficients of longitudinal spherical aberration, a vertical axis represents normalized distances from an optical axis, and variations of the longitudinal spherical aberration according to light wavelengths are illustrated. The longitudinal spherical aberration is shown, for example, for each of light with a wavelength of 656.2700 nanometers (NM), light with a wavelength of 587.5600NM, light with a wavelength of 546.0700NM, light with a wavelength of 486.1300NM, and light with a wavelength of 435.8400NM. FIG. 7 is a graph illustrating the astigmatism of the image capturing device 400 and/or the lens assembly LA according to an embodiment of the disclosure, for light with the wavelength of 546.0700NM, in which 'S' represents a sagittal plane with a solid line, and 'T' represents a tangential plane (or meridional plane) with a dotted line. FIG. 8 is a graph illustrating the distortion of the image capturing device 400 and/or the lens assembly LA according to an embodiment of the disclosure, for light with the wavelength of 546.0700NM. The refractive index of lens(es) mentioned in embodiments described below may refer to the refractive index for light with a wavelength of approximately 587.6nm.

Referring to FIGS. 5 to 8, the image capturing device 400 (e.g., the lens assembly 210 of FIG. 2) according to an embodiment of the disclosure may include an image sensor I or 230 and the lens assembly LA. The lens assembly LA may include, for example, at least six lenses L1, L2, L3, L4, L5, and L6. According to an embodiment, at least one of the lenses L1, L2, L3, L4, L5, and L6 may be a lens made of plastic. For example, within a range satisfying the condition(s) described below, at least one of the lenses L1, L2, L3, L4, L5, and L6 may be made of plastic. As the at least one lens is made of plastic, a production time or production cost may be reduced, and the lenses L1, L2, L3, L4, L5, and L6 may be easily manufactured in designed shapes.

According to an embodiment, the lenses L1, L2, L3, L4, L5, and L6 may be sequentially arranged along an optical axis O from a subject side toward an image sensor side. For example, the lenses L1, L2, L3, L4, L5, and L6 may be disposed substantially in alignment with the image sensor I or 230 on the optical axis O. In an embodiment described below, ordinal numbers 'first,' 'second,' 'third,' 'fourth,' 'fifth,' and 'sixth' assigned to the lenses L1, L2, L3, L4, L5, and L6 may refer to the order of arrangement from the subject side. In an embodiment, in the image capturing device 400 and/or the lens assembly LA, an aperture stop (or a stop) may be disposed between the first lens L1 and the third lens L3. In an embodiment, the aperture stop, stop may be understood as being implemented on a sensor-side surface S4 of the second lens L2.

According to an embodiment, an optical component such as an IR cut filter F may be disposed between any one of the at least six lenses L1, L2, L3, L4, L5, and L6 and the image sensor I or 230. The IR cut filter F may, for example, suppress or block light (e.g., IR light) of a wavelength that is not identified by a user's naked eye but is detected by the photosensitive material of a film or the image sensor I or 230 from being incident on the image sensor I or 230. This IR cut filter F may be disposed between the sixth lens L6 and the image sensor I or 230. Depending on the purpose of the image capturing device 400, the IR cut filter F may be replaced with a band-pass filter that transmits IR light and suppresses or blocks visible light. In an embodiment, the IR cut filter F may be implemented by a coating material disposed on a surface of any one of the lenses L1, L2, L3, L4, L5, and L6.

In the following detailed description, the first lens L1 may be referred to as the "first lens on the subject SBJ side" and the sixth lens L6 may be referred to as the "first lens on the image sensor I or 230 side." In an embodiment, "aligned along a direction of the optical axis O" may refer to being aligned such that the optical axes of the respective lenses L1, L2, L3, L4, L5, and L6 or the optical axis of the image sensor I or 230 (e.g., an imaging plane img) coincides with each other. The imaging plane img may, for example, receive or detect light aligned or focused by the lenses L1, L2, L3, L4, L5, and L6. For example, the imaging plane img may be understood as an active area of the image sensor I or 230. A processor (e.g., the processor 120 of FIG. 1) may obtain an image of a subject SBJ by detecting light focused or guided by the lens assembly LA using the image sensor I or 230. In an embodiment, the processor (e.g., the processor 120 of FIG. 1) may perform a focus adjustment operation and/or a focal length adjustment operation by linearly moving at least one of the lenses L1, L2, L3, L4, L5, and L6 along the direction of the optical axis O with respect to the image sensor I or 230. In an embodiment, the processor may cause an electronic device to receive or detect external light using the image sensor I or 230 by executing at least some of instruction(s) stored in memory (e.g., the memory 130 of FIG. 1). For example, the memory may store instruction(s) that cause the electronic device to receive at least a portion of light focused on the image sensor I or 230 and obtain a subject image based on the received light, and the instruction(s) may be executed by the processor.

In the following embodiment(s), although some of the reference numbers assigned to lens surfaces in the drawings are not directly mentioned, those skilled in the art will easily understand the configurations of the lenses L1, L2, L3, L4, L5, and L6 or the lens surfaces based on lens data presented through [Tables] described below. In describing the following various embodiments, reference numbers for some of the subject-side surface(s) and sensor-side surface(s) of the lenses L1, L2, L3, L4, L5, and L6 and/or inflection points IP may be omitted. In the following detailed description, an 'inflection point (IP)' refers to, for example, a point where a radius of curvature changes while not intersecting the optical axis O, and may be denoted by a symbol '●' in the drawings while the reference number may be omitted. When it is said that "the radius of curvature changes," this may be understood as the value of the radius of curvature changing from a negative value to a positive value or from a positive value to a negative value.

For the reference numbers of lens surfaces omitted in the drawings, the configurations of different embodiments may be applied adaptively, and lens data of each embodiment will be easily understood through the [Tables] described below. In the detailed description of the embodiment(s) of the disclosure, 'concave' or 'convex' regarding the subject-side surfaces or sensor-side surfaces of the lenses L1, L2, L3, L4, L5, and L6 may refer to a lens surface shape at a point intersecting the optical axis O or in a paraxial region intersecting the optical axis O. A shape mentioned as 'concave' may refer to a lens surface forming a curved surface in a form where a lens thickness decreases towards the optical axis O in a paraxial region. A shape mentioned as 'convex' may refer to a lens surface forming a curved surface in a form where a lens thickness increases towards the optical axis O in a paraxial region.

Further, in the following detailed description, values regarding the radii, effective focal lengths f, total track length (OAL), air gaps, and thicknesses of the lenses L1, L2, L3, L4, L5, and L6, or the image height of the image sensor I or 230 may all have units of mm unless otherwise specified. Further, the radii, effective focal lengths, OAL, air gaps, or thicknesses of the lenses L1, L2, L3, L4, L5, and L6 may be distances measured on the optical axis O (e.g., distances measured along the optical axis O from points where the optical axis O intersects), and/or ImgH of the image sensor I may be a distance measured along a direction substantially perpendicular to the optical axis O from the point where the optical axis O intersects.

According to an embodiment, the lens disposed first from the subject SBJ side among the lenses L1, L2, L3, L4, L5, and L6, for example, the first lens L1 disposed farthest from the image sensor, may be a meniscus lens convex toward the subject SBJ side and have a positive refractive power. For example, the first lens L1 may include a convex subject-side surface S1 and a concave sensor-side surface S2. In an embodiment, the sensor-side surface S2 of the first lens L1 may be concave in a chief region intersecting the optical axis O and convex in a marginal region around the chief region. For example, the first lens L1 may include an inflection point IP on the sensor-side surface S2. In an embodiment, the shape of the chief region of the first lens L1 may be useful for miniaturizing the lens assembly LA. For example, as the first lens L1 has a meniscus shape convex toward the subject SBJ side at least in the chief region, the distance from the first lens L1 to the image sensor I or 230 may be reduced. In an embodiment, when the first lens L1 includes an inflection point IP, correction of spherical aberration may be facilitated.

According to an embodiment, the second lens L2 disposed second from the subject SBJ side, for example, between the first lens L1 and the image sensor I or 230, may have a negative refractive power and be a meniscus lens convex toward the subject SBJ side. In an embodiment, the second lens L2 (and/or the fourth lens L4 to be described later) may have a refractive index of approximately 1.6 or more. When the second lens L2 is made of a high-refractive-index (and/or low-Abbe-number) material, the lens assembly LA may be easily miniaturized while having a field of view of approximately 80 degrees or more (and/or approximately 100 degrees or less). When the second lens L2 (and/or the fourth lens L4 described later) satisfies this condition and is combined with the first lens L1 having a low refractive index/high Abbe number, it may provide an environment where chromatic aberration correction is easy.

According to an embodiment, the third lens L3 may be disposed third from the subject SBJ side, for example, between the second lens L2 and the image sensor I or 230, and have a positive refractive power. In an embodiment, the third lens L3 may include a convex sensor-side surface S6 and have an Abbe number of approximately 40 or more. For example, the lens assembly LA may be miniaturized while correction of marginal curvature may be facilitated, by satisfying a condition presented regarding the shape of the third lens L3. In an embodiment, when the material of the third lens L3, for example, a condition regarding the Abbe number, is satisfied, chromatic aberration correction in the lens assembly LA may be facilitated.

According to an embodiment, the fourth lens L4 may be disposed fourth from the subject SBJ side, for example, between the third lens L3 and the image sensor I or 230, and have a negative refractive power. In an embodiment, the fourth lens L4 may have a meniscus shape which is convex toward the subject SBJ side in a chief region intersecting the optical axis O, and a meniscus shape convex toward the image sensor I or 230 side as it moves away from the optical axis O. The shape of the fourth lens L4 may be useful for miniaturizing the lens assembly LA and facilitate marginal curvature correction. In facilitating the correction of marginal curvature or aberrations, the fourth lens L4 may include at least one inflection point IP on a subject-side surface S7 and/or a sensor-side surface S8 thereof. In an embodiment, the fourth lens L4 (and/or the above-mentioned second lens L2) may have a refractive index of approximately 1.6 or more. When the fourth lens L4 is made of a high-refractive-index (and/or low-Abbe-number) material, the lens assembly LA may be easily miniaturized while having a field of view of approximately 80 degrees or more. When the fourth lens L4 (and/or the above-mentioned second lens L2) satisfies this condition and is combined with the first lens L1 having a low refractive index/high Abbe number, it may provide an environment where chromatic aberration correction is easy.

According to an embodiment, the fifth lens L5 disposed between the fourth lens L4 and the image sensor I or 230 may have a positive refractive power. In an embodiment, the fifth lens L5 may have a biconvex shape in a chief region intersecting the optical axis O, for example, a shape in which the chief regions of a subject-side surface S9 and a sensor-side surface S10 are convex. In an embodiment, the fifth lens L5 may have a meniscus shape convex toward the image sensor I or 230 side in the marginal region thereof. For example, the fifth lens L5 may include at least one inflection point IP on the subject-side surface S9 and/or the sensor-side surface S10. In an embodiment, the shape of the fifth lens L5 may facilitate correction of marginal curvature or aberration in the lens assembly LA and make it easier to control the angle of light rays incident on the image sensor I or 230.

According to an embodiment, the sixth lens L6 disposed between the fifth lens L5 and the image sensor I or 230 may have a negative refractive power. In an embodiment, the sixth lens L6 may have a shape in which a subject-side surface S11 is concave and a sensor-side surface S12 is concave in a chief region intersecting the optical axis O. In an embodiment, a marginal region (e.g., a region surrounding the chief region) of the sixth lens L6 may be a convex shape inclined toward the subject SBJ side, and the sixth lens L6 may include at least one inflection point IP on the subject-side surface S11 and/or the sensor-side surface S12. In an embodiment, the subject-side surface S11 of the sixth lens L6 may have a shape in which a first part directly contacting the chief region in the marginal region is generally convex toward the subject SBJ side, while a second part of the marginal region disposed around the first part and adjacent to an edge of the sixth lens L6 is concave. For example, the subject-side surface S11 of the sixth lens L6 may include at least two inflection points IP. In an embodiment, the sixth lens L6 may provide an environment where correction of marginal curvature or aberration is easy by including at least one inflection point IP. In an embodiment, the above-mentioned condition for the sixth lens L6 may be useful for realizing optical performance suitable for a large-sized image sensor while reducing the effective diameter of the lens (e.g., the sixth lens L6) closest to the image sensor I or 230. In an embodiment, the above-mentioned condition for the sixth lens L6 may be useful for reducing the total length of the lens assembly LA.

According to an embodiment, the IR cut filter F may be disposed between the sixth lens L6 and the image sensor I or 230. As mentioned above, the IR cut filter F may block light in a wavelength band that is not detected by the human eye but is detected by a photosensitive material or the image sensor I or 230. In an embodiment, when the image capturing device 400 functions as a camera (e.g., a depth camera) that detects light in the IR wavelength band, the IR cut filter F may be replaced with a band-pass filter and/or may be implemented as a coating material disposed on a lens surface of any one of the lenses L1, L2, L3, L4, L5, and L6.

According to an embodiment, the image capturing device 400 and/or its lens assembly LA may be miniaturized while providing optical performance suitable for a large-sized and/or high-pixel image sensor I or 230 by satisfying at least one of the conditions presented through the following [Equation 1, 2, 3].

[Equation 1]

$$5.9mm \leq f \times \tan(semi\text{-}FOV) \leq 6.5mm$$

In [Equation 1], 'f' may be the effective focal length of the lens assembly LA, and 'semi-FOV' may be a half field of view of the lens assembly LA. According to an embodiment, when the condition of [Equation 1] is satisfied, the lens assembly LA may be easily miniaturized while providing optical performance suitable for an image sensor of a size of approximately 1/1.3 inches. For example, the lens assembly LA satisfying the condition of [Equation 1] may provide a field of view corresponding to the image height of the large-sized image sensor I or 230 while being miniaturized by including the six lenses L1, L2, L3, L4, L5, and L6.

[Equation 2]

$$0.55 \leq \frac{OAL}{(ImgH \times 2)} \leq 0.64$$

In [Equation 2], 'OAL' may be the distance from the subject-side surface S1 of the first lens L1 to the image sensor I or 230 (e.g., the imaging plane img), measured on the optical axis O, and 'ImgH' may be the maximum image height of the image sensor I or 230. In an embodiment, the maximum image height 'ImgH' of the image sensor I or 230 may be understood as a half of the diagonal length of the imaging plane img. For example, the maximum image height 'ImgH' of the image sensor I or 230 may refer to a maximum length from a point crossing the optical axis O to an edge of the imaging plane img. According to an embodiment, when the condition of [Equation 2] is satisfied, the lens assembly LA may have a short total length relative to the size (e.g., maximum image height) of the image sensor I or 230. For example, when the calculated value of [Equation 2] exceeds an upper limit of 0.64, the total length OAL of the lens assembly LA relative to the size of the image sensor I or 230 becomes long, which may make miniaturization difficult. In an embodiment, when the calculated value of [Equation 2] is less than a lower limit of 0.55, it may be understood that the lens assembly LA is miniaturized, but it may be difficult to secure an appropriate level of thickness and spacing (e.g., air gap) in the manufacturing or assembly of the lenses L1, L2, L3, L4, L5, and L6.

[Equation 3]

$$1 \leq \frac{SA}{L5S1ape} \leq 1.4$$

In [Equation 3], 'SA' may be the distance from the subject-side surface S1 of the first lens L1 to the subject-side surface S9 of the fifth lens L5, measured on the optical axis O, and 'L5S1ape' may be a half-aperture size of the subject-side surface S9 of the fifth lens L5. For example, [Equation 3] presents a condition regarding the shape or size and arrangement of the fifth lens L5, and when the condition of [Equation 3] is satisfied, the lens assembly LA may provide optical performance suitable for the large-sized image sensor I or 230 while being miniaturized. In an embodiment, when the calculated value of [Equation 3] exceeds an upper limit, the SAG value of the subject-side surface S9 of the fifth lens L5 increases, which may cause difficulty in processing. In an embodiment, when the calculated value of [Equation 3] exceeds the upper limit, the thickness of the fifth lens L5 increases, which may cause difficulty in miniaturization. In an embodiment, when the calculated value of [Equation 3] does not reach a lower limit, the refractive power and/or thickness of the fifth lens L5 decreases, which may cause difficulty in manufacturing.

According to an embodiment, the image capturing device 400 and/or its lens assembly LA may be more easily miniaturized by satisfying a condition presented through the following [Equation 4].

[Equation 4]

$$0.2 \leq \frac{T23}{(CT2 + CT3)} \leq 0.5$$

In [Equation 4], 'T23' may be the air gap between the second lens L2 and the third lens L3, measured on the optical axis O, 'CT2' may be the thickness of the second lens L2 measured on the optical axis O, and 'CT3' may be the thickness of the third lens L3 measured on the optical axis O. In an embodiment, when the condition of [Equation 4] is satisfied, it may be easy to dispose the aperture stop, stop between the first lens L1 and the third lens L3, and the lens assembly LA may be miniaturized through the arrangement of the aperture stop, stop. In embodiment(s) of the disclosure, the aperture stop, stop of the lens assembly LA may be exemplified as being disposed on the sensor-side surface S4 of the second lens L2. In an embodiment, when the aperture stop, stop is disposed between the first lens L1 and the third lens L3, it may be easy to control aberration or secure a marginal light ratio. In an embodiment, when the calculated value of [Equation 4] exceeds 0.5, the air gap between the second lens L2 and the third lens L3 increases, which may make miniaturization difficult and cause difficulty in securing the marginal light ratio. In an embodiment, when the calculated value of [Equation 4] does not reach 0.2, the lens assembly LA may be miniaturized, but the refractive power may become weak, making it difficult to secure good modulation transfer function (MTF) performance.

According to an embodiment, the image capturing device 400 and/or its lens assembly LA may be more easily miniaturized by satisfying a condition presented through the following [Equation 5].

[Equation 5]

$$1.7 \leq Fno \leq 1.9$$

[Equation 5] presents a conditions regarding the F-number 'Fno' of the image capturing device 400, and the lens assembly LA is implemented with the six lenses L1, L2, L3, L4, L5, and L6 so that it may be easily miniaturized while having good brightness performance. For example, when the F-number of the image capturing device 400 exceeds an upper limit of 1.9 in [Equation 5], resolution may decrease and/or brightness performance may decrease. In an embodiment, when the F-number of the image capturing device 400 does not reach 1.7 in [Equation 5], a bright optical system may be implemented, but it may be inevitable to use a larger number of lenses, which may cause difficulty in miniaturization.

The image capturing device 400 and/or its lens assembly LA according to embodiments of the disclosure may be miniaturized while providing optical performance suitable for a high-performance image sensor I or 230, for example, a large-sized/high-pixel sensor, by satisfying at least some of the above-described conditions. For example, the lens assembly LA may be implemented with approximately six lenses L1, L2, L3, L4, L5, and L6 to facilitate miniaturization or weight reduction, and provide a field of view, brightness, and/or aberration control performance suitable for an image sensor I or 230 of approximately 1/1.3 inches or more.

According to an embodiment, the image capturing device 400 and/or its lens assembly LA may have a focal length of approximately 6.69mm, and implement a field of view of approximately 84 degrees while having an F-number of approximately 1.88. In an embodiment, the image capturing device 400 and/or its lens assembly LA may satisfy at least some of the above-described condition(s) and be manufactured to the specifications illustrated in the following [Table 1].

[Table 1]

| Lens surface (Surf) | Radius of curvature (Radius) | Thickness or air gap (Thick) | Refractive index (nd) | Abbe number (Vd) |
|---|---|---|---|---|
| SBJ | infinity | 1000 | | |
| S1 | 2.579 | 0.96 | 1.54397 | 55.91 |

(continued)

| Lens surface (Surf) | Radius of curvature (Radius) | Thickness or air gap (Thick) | Refractive index (nd) | Abbe number (Vd) |
|---|---|---|---|---|
| S2 | 12.139 | 0.133 | | |
| S3 | 10.187 | 0.338 | 1.67074 | 19.23 |
| S4(stop) | 4.945 | 0.474 | | |
| S5 | 86.965 | 0.869 | 1.56717 | 37.39 |
| S6 | -46.026 | 0.42 | | |
| S7 | 15.142 | 0.414 | 1.61444 | 25.94 |
| S8 | 9.553 | 0.629 | | |
| S9 | 8.978 | 1.008 | 1.54397 | 55.91 |
| S10 | -4.083 | 0.703 | | |
| S11 | -5.378 | 0.602 | 1.5348 | 55.71 |
| S12 | 3.457 | 0.252 | | |
| S13 | infinity | 0.11 | 1.5168 | 64.17 |
| S14 | infinity | 0.989 | | |
| img | infinity | 0.008 | | |

[Table 2], [Table 3], and [Table 4] below list the aspherical coefficients of the lenses L1, L2, L3, L4, L5, and L6, and the definition of an aspherical surface is given by the following [Equation 6].

[Equation 6]

$$x = \frac{y^2/R}{1 + \sqrt{1 - (1+k)(y/R)^2}} + \sum_i (A_i)(y^i)$$

In [Equation 6], "x" may be a distance in the direction of the optical axis O from a point where the optical axis O passes through a lens surface, "y" may be a distance in a direction perpendicular to the optical axis O from the optical axis O, 'R' may represent a radius of curvature at a vertex of a lens, 'k' may represent the Conic constant, and 'Ai' may represent aspherical coefficients, which may be denoted by 'A', 'B', 'C', 'D', 'E', 'F', 'G', 'H', 'J', 'K', 'L', 'M', 'N', and 'O' in the [Tables] described later.

[Table 2]

| Lens surface (Surf) | 1_ASP | 2_ASP | 3_ASP | 4_ASP |
|---|---|---|---|---|
| Radius of curvature (Radius) | 2.57915.E+00 | 1.21390.E+01 | 1.01872.E+01 | 4.94471.E+00 |
| k(Conic) | 3.38872.E-01 | -3.17903.E+00 | -7.77569.E+01 | -9.51532.E+00 |
| A(4th)/C4 | -4.64558.E-02 | -4.77430.E-02 | 5.02759.E-03 | 4.05029.E-02 |
| B(6th)/C5 | -1.09691.E-02 | 4.09764.E-03 | 1.62183.E-02 | 1.04567.E-02 |
| C(8th)/C6 | -4.24425.E-03 | -3.27261.E-03 | -9.79530.E-04 | 6.11134.E-04 |
| D(10th)/C7 | -1.31679.E-03 | 2.37162.E-04 | 9.64266.E-04 | 7.19250.E-04 |
| E(12th)/C8 | -4.49283.E-04 | -6.20405.E-05 | 5.18066.E-05 | 1.73269.E-04 |
| F(14th)/C9 | -8.17390.E-05 | -2.26088.E-05 | -1.45364.E-05 | 5.85302.E-05 |
| G(16th)/C10 | -3.89210.E-05 | -1.15698.E-05 | 6.76594.E-06 | 1.19396.E-05 |
| H(18th)/C11 | -8.05407.E-07 | -5.96076.E-06 | -1.08408.E-06 | 1.32503.E-05 |
| J(20th)/C12 | -8.61681.E-06 | 2.94201.E-06 | 1.08763.E-05 | 6.43481.E-06 |
| K(22th)/C13 | 0.00000E+00 | 0.00000E+00 | 0.00000E+00 | 0.00000E+00 |

(continued)

| Lens surface (Surf) | 1_ASP | 2_ASP | 3_ASP | 4_ASP |
|---|---|---|---|---|
| L(24th)/C14 | 0.00000E+00 | 0.00000E+00 | 0.00000E+00 | 0.00000E+00 |
| M(26th)/C15 | 0.00000E+00 | 0.00000E+00 | 0.00000E+00 | 0.00000E+00 |
| N(28th)/C16 | 0.00000E+00 | 0.00000E+00 | 0.00000E+00 | 0.00000E+00 |
| O(30th)/C17 | 0.00000E+00 | 0.00000E+00 | 0.00000E+00 | 0.00000E+00 |

[Table 3]

| Lens surface (Surf) | 5_ASP | 6_ASP | 7_ASP | 8_ASP |
|---|---|---|---|---|
| Radius of curvature (Radius) | 8.69654.E+01 | -4.60264.E+01 | 1.51425.E+01 | 9.55310.E+00 |
| k(Conic) | 0.00000.E+00 | 0.00000.E+00 | -1.55780.E+00 | -4.75237.E+01 |
| A(4th)/C4 | -8.06647.E-02 | -2.28788.E-01 | -5.98955.E-01 | -7.25303.E-01 |
| B(6th)/C5 | -2.26862.E-03 | -2.44478.E-03 | 3.10228.E-02 | 1.84139.E-01 |
| C(8th)/C6 | 8.71638.E-04 | 1.85614.E-03 | -1.37108.E-02 | -3.04557.E-02 |
| D(10th)/C7 | 7.82115.E-04 | 3.20351.E-03 | -1.51274.E-03 | -5.51537.E-03 |
| E(12th)/C8 | 3.29158.E-04 | 1.13525.E-03 | -1.04427.E-03 | 4.87369.E-04 |
| F(14th)/C9 | 1.13249.E-04 | 6.19464.E-04 | 1.48525.E-04 | 1.56995.E-03 |
| G(16th)/C10 | 3.84065.E-05 | 2.43658.E-04 | 2.52497.E-04 | -2.03927.E-04 |
| H(18th)/C11 | 4.03777.E-06 | 8.93228.E-05 | 1.38254.E-04 | -3.39524.E-04 |
| J(20th)/C12 | -6.02195.E-07 | 3.60071.E-05 | 8.21854.E-05 | -1.00035.E-05 |
| K(22th)/C13 | 0.00000E+00 | 0.00000E+00 | 3.37709.E-05 | 1.79027.E-05 |
| L(24th)/C14 | 0.00000E+00 | 0.00000E+00 | 2.96556.E-05 | -1.63963.E-06 |
| M(26th)/C15 | 0.00000E+00 | 0.00000E+00 | 6.27620.E-06 | -3.24874.E-05 |
| N(28th)/C16 | 0.00000E+00 | 0.00000E+00 | 8.68060.E-06 | -1.14378.E-06 |
| O(30th)/C17 | 0.00000E+00 | 0.00000E+00 | 5.30590.E-06 | -8.23335.E-06 |

[Table 4]

| Lens surface (Surf) | 9_ASP | 10_ASP | 11_ASP | 12_ASP |
|---|---|---|---|---|
| Radius of curvature (Radius) | 8.97786.E+00 | -4.08291.E+00 | -5.37836.E+00 | 3.45655.E+00 |
| k(Conic) | -2.66013.E-01 | -6.11955.E+00 | -1.04353.E+00 | -9.82893.E+00 |
| A(4th)/C4 | -1.40666.E+00 | 2.51925.E-01 | 5.29361.E-01 | -3.16601.E+00 |
| B(6th)/C5 | 1.33109.E-01 | -3.68379.E-01 | 4.83321.E-01 | 7.18642.E-01 |
| C(8th)/C6 | 1.17348.E-01 | 1.91397.E-01 | -2.38551.E-01 | -7.06329.E-02 |
| D(10th)/C7 | -2.15911.E-02 | -7.67517.E-03 | 7.15204.E-02 | 4.68052.E-02 |
| E(12th)/C8 | -1.07762.E-02 | 1.21314.E-02 | -2.41463.E-02 | -5.01955.E-02 |
| F(14th)/C9 | -6.67749.E-04 | -9.00004.E-04 | 1.14946.E-03 | -2.24830.E-03 |
| G(16th)/C10 | 2.14435.E-03 | -8.93685.E-04 | 3.73928.E-03 | -7.96410.E-03 |
| H(18th)/C11 | -3.24252.E-05 | -1.03878.E-03 | -3.56606.E-03 | 3.81434.E-03 |
| J(20th)/C12 | -1.04187.E-04 | -2.30897.E-04 | 5.64157.E-04 | 1.11449.E-03 |
| K(22th)/C13 | 0.00000E+00 | 0.00000E+00 | 4.99308.E-04 | 2.98286.E-04 |
| L(24th)/C14 | 0.00000E+00 | 0.00000E+00 | -2.22502.E-04 | -1.11636.E-03 |
| M(26th)/C15 | 0.00000E+00 | 0.00000E+00 | 3.23164.E-05 | -1.27624.E-04 |

(continued)

| Lens surface (Surf) | 9_ASP | 10_ASP | 11_ASP | 12_ASP |
|---|---|---|---|---|
| N(28th)/C16 | 0.00000E+00 | 0.00000E+00 | 4.12673.E-05 | 8.18926.E-05 |
| O(30th)/C17 | 0.00000E+00 | 0.00000E+00 | 1.58560.E-05 | 1.77574.E-04 |

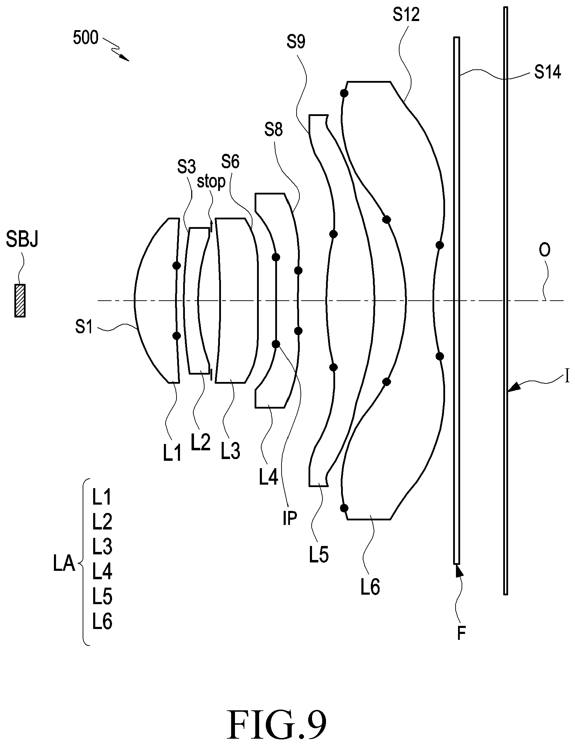

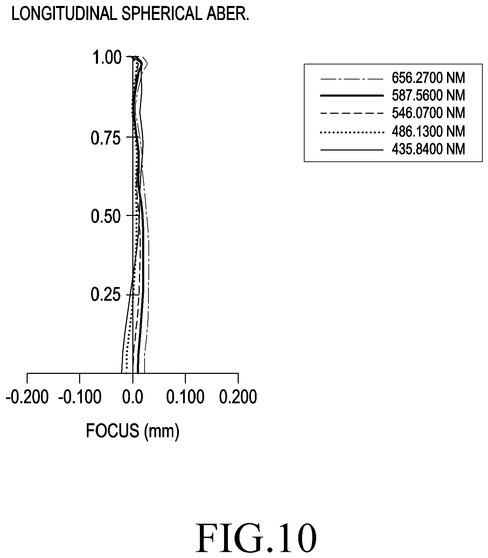

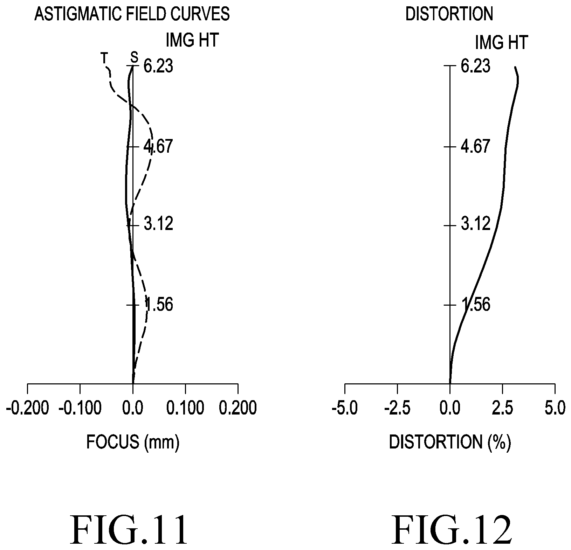

FIG. 9 is a diagram illustrating the image capturing device 500 and/or the lens assembly LA according to an embodiment of the disclosure. FIG. 10 is a graph illustrating spherical aberration of the lens assembly LA of FIG. 9 according to an embodiment of the disclosure. FIG. 11 is a graph illustrating astigmatism of the lens assembly LA of FIG. 9 according to an embodiment of the disclosure. FIG. 12 is a graph illustrating distortion of the lens assembly LA of FIG. 9 according to an embodiment of the disclosure.

The image capturing device 500 of FIG. 9 and/or its lens assembly LA may have a focal length of approximately 6.6mm, and implement a field of view of approximately 85 degrees while having an F-number of approximately 1.88. In an embodiment, the image capturing device 500 and/or its lens assembly LA may satisfy at least some of the above-described condition(s), be manufactured to the specifications illustrated in the following [Table 5], and have the aspherical coefficients of [Table 6], [Table 7], and [Table 8].

[Table 5]

| Lens surface (Surf) | Radius of curvature (Radius) | Thickness or air gap (Thick) | Refractive index (nd) | Abbe number (Vd) |
|---|---|---|---|---|
| SBJ | infinity | 1000 | | |
| S1 | 2.562 | 0.9 | 1.54397 | 55.91 |
| S2 | 11.075 | 0.182 | | |
| S3 | 10.267 | 0.324 | 1.67074 | 19.23 |
| S4(stop) | 4.918 | 0.415 | | |
| S5 | 54.147 | 0.878 | 1.56717 | 37.39 |
| S6 | -39.302 | 0.42 | | |
| S7 | 16.397 | 0.465 | 1.61444 | 25.94 |
| S8 | 9.406 | 0.642 | | |
| S9 | 11.312 | 1.04 | 1.54397 | 55.91 |
| S10 | -3.134 | 0.718 | | |
| S11 | -3.587 | 0.6 | 1.5348 | 55.71 |
| S12 | 4.102 | 0.411 | | |
| S13 | infinity | 0.11 | 1.5168 | 64.17 |
| S14 | infinity | 0.805 | | |
| img | infinity | 0.005 | | |

[Table 6]

| Lens surface (Surf) | 1_ASP | 2_ASP | 3_ASP | 4_ASP |
|---|---|---|---|---|
| Radius of curvature (Radius) | 2.561621326 | 11.07540897 | 10.26666582 | 4.91800545 |
| k(Conic) | 0.32711999 | -3.919704901 | -69.52298774 | -8.729606485 |
| A(4th)/C4 | -0.048450978 | -0.049742743 | 0.007330204 | 0.042251591 |
| B(6th)/C5 | -0.013203223 | 0.001644266 | 0.017325311 | 0.011364733 |
| C(8th)/C6 | -0.00514867 | -0.003052198 | -0.00086794 | 0.00020927 |
| D(10th)/C7 | -0.00166917 | -0.000103573 | 0.000801852 | 0.000524992 |
| E(12th)/C8 | -0.000573059 | -9.48E-05 | 4.98E-05 | 0.000137712 |

(continued)

| Lens surface (Surf) | 1_ASP | 2_ASP | 3_ASP | 4_ASP |
|---|---|---|---|---|
| F(14th)/C9 | -0.000138154 | -2.41E-05 | 7.23E-07 | 2.41E-05 |
| G(16th)/C10 | -5.70E-05 | -4.59E-06 | 1.82E-05 | 1.90E-05 |
| H(18th)/C11 | -1.71E-06 | -3.35E-06 | 6.66E-06 | 5.31E-06 |
| J(20th)/C12 | -7.42E-06 | 3.06E-07 | 9.16E-06 | 1.27E-05 |
| K(22th)/C13 | 0.00000E+00 | 0.00000E+00 | 0.00000E+00 | 0.00000E+00 |
| L(24th)/C14 | 0.00000E+00 | 0.00000E+00 | 0.00000E+00 | 0.00000E+00 |
| M(26th)/C15 | 0.00000E+00 | 0.00000E+00 | 0.00000E+00 | 0.00000E+00 |
| N(28th)/C16 | 0.00000E+00 | 0.00000E+00 | 0.00000E+00 | 0.00000E+00 |
| O(30th)/C17 | 0.00000E+00 | 0.00000E+00 | 0.00000E+00 | 0.00000E+00 |

[Table 7]

| Lens surface (Surf) | 5_ASP | 6_ASP | 7_ASP | 8_ASP |
|---|---|---|---|---|
| Radius of curvature (Radius) | 54.14733405 | -39.30208937 | 16.39709875 | 9.405921076 |
| k(Conic) | 279.7636387 | -2325.888119 | 7.298976624 | -37.43592542 |
| A(4th)/C4 | -0.078478642 | -0.25212078 | -0.581727472 | -0.734250534 |
| B(6th)/C5 | -0.004122826 | -0.005878345 | 0.020554785 | 0.166541315 |
| C(8th)/C6 | 4.58E-05 | -0.001112593 | -0.010402762 | -0.018729366 |
| D(10th)/C7 | 0.000411412 | 0.001901485 | -0.003000361 | -0.008273657 |
| E(12th)/C8 | 0.000291715 | 0.000630016 | -0.002115016 | -0.000654438 |
| F(14th)/C9 | 8.56E-05 | 0.000441754 | -0.000506858 | 0.0019683 |
| G(16th)/C10 | 6.22E-05 | 0.000196474 | -0.000118247 | 8.93E-05 |
| H(18th)/C11 | 2.16E-06 | 8.28E-05 | -5.15E-06 | -0.000296309 |
| J(20th)/C12 | 2.09E-05 | 3.85E-05 | -5.06E-07 | -0.00012399 |
| K(22th)/C13 | 0.00000E+00 | 0.00000E+00 | 0.00000E+00 | 0.00000E+00 |
| L(24th)/C14 | 0.00000E+00 | 0.00000E+00 | 0.00000E+00 | 0.00000E+00 |
| M(26th)/C15 | 0.00000E+00 | 0.00000E+00 | 0.00000E+00 | 0.00000E+00 |
| N(28th)/C16 | 0.00000E+00 | 0.00000E+00 | 0.00000E+00 | 0.00000E+00 |
| O(30th)/C17 | 0.00000E+00 | 0.00000E+00 | 0.00000E+00 | 0.00000E+00 |

[Table 8]

| Lens surface (Surf) | 9_ASP | 10_ASP | 11_ASP | 12_ASP |
|---|---|---|---|---|
| Radius of curvature (Radius) | 11.31158027 | -3.133658057 | -3.586906359 | 4.101565167 |
| k(Conic) | 1.553555104 | -4.833885879 | -2.031831936 | -13.54079752 |
| A(4th)/C4 | -1.197274165 | 0.41526201 | 0.849271554 | -2.903079901 |
| B(6th)/C5 | 0.048326607 | -0.280991265 | 0.406674575 | 0.58727099 |
| C(8th)/C6 | 0.112262092 | 0.089541539 | -0.258702654 | 0.002307956 |
| D(10th)/C7 | 0.016534736 | 0.032105821 | 0.086627729 | 0.039780449 |
| E(12th)/C8 | -0.014192109 | 0.001006481 | -0.014698494 | -0.051768141 |
| F(14th)/C9 | -0.007743696 | -0.000220557 | -0.008451998 | -0.00455025 |
| G(16th)/C10 | 0.000684695 | 0.001047906 | 0.007721336 | 0.000353042 |

(continued)

| Lens surface (Surf) | 9_ASP | 10_ASP | 11_ASP | 12_ASP |
|---|---|---|---|---|
| H(18th)/C11 | 0.001623697 | -0.000986113 | -0.003433777 | 0.002615616 |
| J(20th)/C12 | 0.000369147 | -0.000243633 | 0.000771997 | -0.000108643 |
| K(22th)/C13 | 0.00000E+00 | 0.00000E+00 | 0.00000E+00 | 0.00000E+00 |
| L(24th)/C14 | 0.00000E+00 | 0.00000E+00 | 0.00000E+00 | 0.00000E+00 |
| M(26th)/C15 | 0.00000E+00 | 0.00000E+00 | 0.00000E+00 | 0.00000E+00 |
| N(28th)/C16 | 0.00000E+00 | 0.00000E+00 | 0.00000E+00 | 0.00000E+00 |
| O(30th)/C17 | 0.00000E+00 | 0.00000E+00 | 0.00000E+00 | 0.00000E+00 |

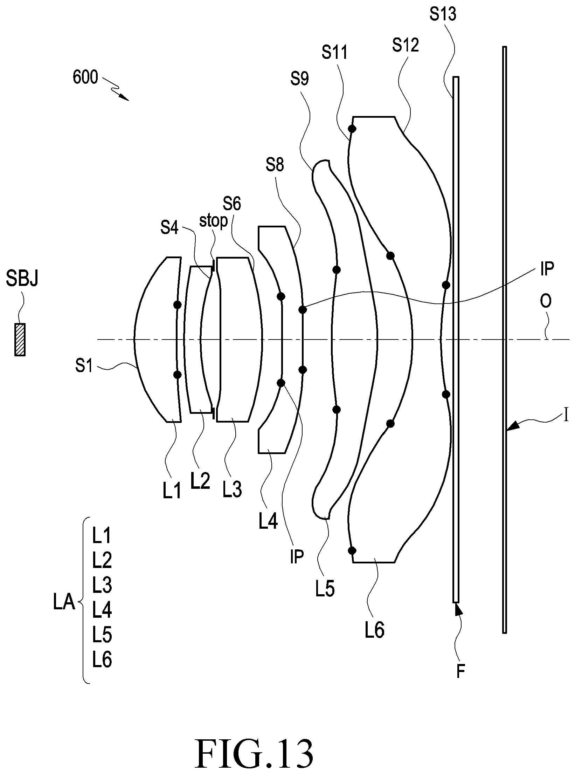

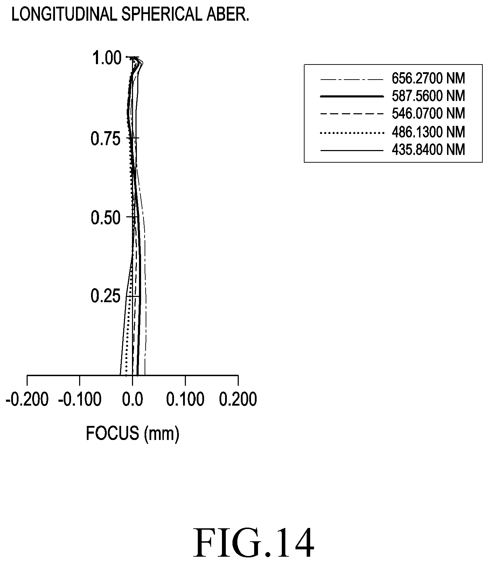

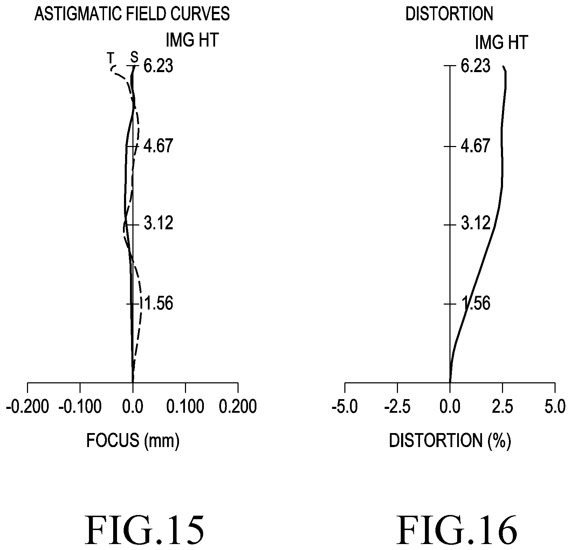

FIG. 13 is a diagram illustrating the image capturing device 600 and/or the lens assembly LA according to an embodiment of the disclosure. FIG. 14 is a graph illustrating spherical aberration of the lens assembly LA of FIG. 13 according to an embodiment of the disclosure. FIG. 15 is a graph illustrating astigmatism of the lens assembly LA of FIG. 13 according to an embodiment of the disclosure. FIG. 16 is a graph illustrating distortion of the lens assembly LA of FIG. 13 according to an embodiment of the disclosure.

The image capturing device 600 of FIG. 13 and/or its lens assembly LA may have a focal length of approximately 6.64mm, and implement a field of view of approximately 84 degrees while having an F-number of approximately 1.88. In an embodiment, the image capturing device 600 and/or its lens assembly LA may satisfy at least some of the above-described condition(s), be manufactured to the specifications illustrated in the following [Table 9], and have the aspherical coefficients of [Table 10], [Table 11], and [Table 12].

[Table 9]

| Lens surface (Surf) | Radius of curvature (Radius) | Thickness or air gap (Thick) | Refractive index (nd) | Abbe number (Vd) |
|---|---|---|---|---|
| SBJ | infinity | 1000 | | |
| S1 | 2.55 | 0.9 | 1.54397 | 55.91 |
| S2 | 11.249 | 0.165 | | |
| S3 | 10.579 | 0.329 | 1.67074 | 19.23 |
| S4(stop) | 5.014 | 0.437 | | |
| S5 | 84.995 | 0.851 | 1.56717 | 37.39 |
| S6 | -39.009 | 0.42 | | |
| S7 | 17.826 | 0.461 | 1.61444 | 25.94 |
| S8 | 10.376 | 0.64 | | |
| S9 | 11.221 | 0.961 | 1.54397 | 55.91 |
| S10 | -3.549 | 0.768 | | |
| S11 | -4.616 | 0.6 | 1.5348 | 55.71 |
| S12 | 3.635 | 0.25 | | |
| S13 | infinity | 0.11 | 1.5168 | 64.17 |
| S14 | infinity | 0.981 | | |
| img | infinity | -0.002 | | |

[Table 10]

| Lens surface (Surf) | 1_ASP | 2_ASP | 3_ASP | 4_ASP |
|---|---|---|---|---|
| Radius of curvature (Radius) | 2.550010375 | 11.24851767 | 10.57920856 | 5.01362666 |
| k(Conic) | 0.34047378 | -1.392527323 | -75.25798121 | -8.923480264 |

(continued)

| Lens surface (Surf) | 1_ASP | 2_ASP | 3_ASP | 4_ASP |
|---|---|---|---|---|
| A(4th)/C4 | -0.044436192 | -0.048159208 | 0.007305214 | 0.043407554 |
| B(6th)/C5 | -0.011723953 | 0.003165618 | 0.017556955 | 0.011978478 |
| C(8th)/C6 | -0.004755801 | -0.003180283 | -0.000937552 | 0.000504728 |
| D(10th)/C7 | -0.001639008 | -2.93E-05 | 0.000918226 | 0.000709103 |
| E(12th)/C8 | -0.000585616 | -0.000108377 | 5.96E-05 | 0.000190889 |
| F(14th)/C9 | -0.000145046 | -3.47E-05 | -1.12E-05 | 6.17E-05 |
| G(16th)/C10 | -6.33E-05 | -1.25E-05 | 1.32E-05 | 2.31E-05 |
| H(18th)/C11 | -1.20E-05 | -6.83E-06 | 2.21E-06 | 1.48E-05 |
| J(20th)/C12 | -9.75E-06 | 2.93E-06 | 1.36E-05 | 1.16E-05 |
| K(22th)/C13 | 0.00000E+00 | 0.00000E+00 | 0.00000E+00 | 0.00000E+00 |
| L(24th)/C14 | 0.00000E+00 | 0.00000E+00 | 0.00000E+00 | 0.00000E+00 |
| M(26th)/C15 | 0.00000E+00 | 0.00000E+00 | 0.00000E+00 | 0.00000E+00 |
| N(28th)/C16 | 0.00000E+00 | 0.00000E+00 | 0.00000E+00 | 0.00000E+00 |
| O(30th)/C17 | 0.00000E+00 | 0.00000E+00 | 0.00000E+00 | 0.00000E+00 |

[Table 11]

| Lens surface (Surf) | 5_ASP | 6_ASP | 7_ASP | 8_ASP |
|---|---|---|---|---|
| Radius of curvature (Radius) | 84.99495448 | -39.0092888 | 17.82579325 | 10.37585413 |
| k(Conic) | 158.9502722 | -2096.29364 | 23.89320756 | -31.07635074 |
| A(4th)/C4 | -0.083232902 | -0.25907739 | -0.592271009 | -0.730044153 |
| B(6th)/C5 | -0.002588249 | 0.00078023 | 0.029181025 | 0.184261202 |
| C(8th)/C6 | 0.000550321 | 0.00131791 | -0.012039393 | -0.030253378 |
| D(10th)/C7 | 0.000712198 | 0.00296804 | -0.004010169 | -0.008008962 |
| E(12th)/C8 | 0.000368922 | 0.00119888 | -0.001583719 | 0.001645328 |
| F(14th)/C9 | 0.000144211 | 0.00071051 | -0.000122714 | 0.001668273 |
| G(16th)/C10 | 6.54E-05 | 0.00033324 | 0.000199153 | -0.000319455 |
| H(18th)/C11 | 1.27E-05 | 0.00012302 | 5.85E-05 | -0.00040655 |
| J(20th)/C12 | 3.55E-06 | 5.40E-05 | 7.45E-05 | 5.01E-05 |
| K(22th)/C13 | 0.00000E+00 | 0.00000E+00 | 2.01E-05 | 2.53E-05 |
| L(24th)/C14 | 0.00000E+00 | 0.00000E+00 | 2.59E-05 | 1.76E-05 |
| M(26th)/C15 | 0.00000E+00 | 0.00000E+00 | -9.84E-06 | 1.09E-06 |
| N(28th)/C16 | 0.00000E+00 | 0.00000E+00 | 3.35E-06 | 3.36E-05 |
| O(30th)/C17 | 0.00000E+00 | 0.00000E+00 | 4.60E-06 | -1.01E-06 |

[Table 12]

| Lens surface (Surf) | 9_ASP | 10_ASP | 11_ASP | 12_ASP |
|---|---|---|---|---|
| Radius of curvature (Radius) | 11.22115329 | -3.549345961 | -4.616491682 | 3.63485406 |
| k(Conic) | 1.486839093 | -4.974113692 | -1.244761528 | -11.0300577 |
| A(4th)/C4 | -1.201365959 | 0.377858154 | 0.718575236 | -3.09463214 |
| B(6th)/C5 | 0.054207513 | -0.305781236 | 0.480552751 | 0.64671586 |

(continued)

| Lens surface (Surf) | 9_ASP | 10_ASP | 11_ASP | 12_ASP |
|---|---|---|---|---|
| C(8th)/C6 | 0.102402594 | 0.100230317 | -0.281035802 | -0.04468637 |
| D(10th)/C7 | 0.009715791 | 0.021482285 | 0.106139824 | 0.06094673 |
| E(12th)/C8 | -0.008713792 | 0.008458324 | -0.032628254 | -0.06305086 |
| F(14th)/C9 | -0.006945859 | 0.001167806 | 0.000625155 | 0.00045034 |
| G(16th)/C10 | 0.001236815 | 0.001744612 | 0.002669045 | -0.00584641 |
| H(18th)/C11 | 0.000738393 | -0.001750309 | -0.001253601 | 0.0023298 |
| J(20th)/C12 | 0.00010069 | -0.000449458 | -0.000189524 | -0.00023021 |
| K(22th)/C13 | 0.00000E+00 | 0.00000E+00 | -0.000480025 | 0.00016649 |
| L(24th)/C14 | 0.00000E+00 | 0.00000E+00 | 0.000602443 | -0.00054531 |
| M(26th)/C15 | 0.00000E+000 | 0.00000E+00 | -0.000228762 | -1.87E-05 |
| N(28th)/C16 | 0.00000E+00 | 0.00000E+00 | -9.28E-05 | 9.63E-05 |
| O(30th)/C17 | 0.00000E+00 | 0.00000E+00 | 0.000123787 | 0.00012578 |

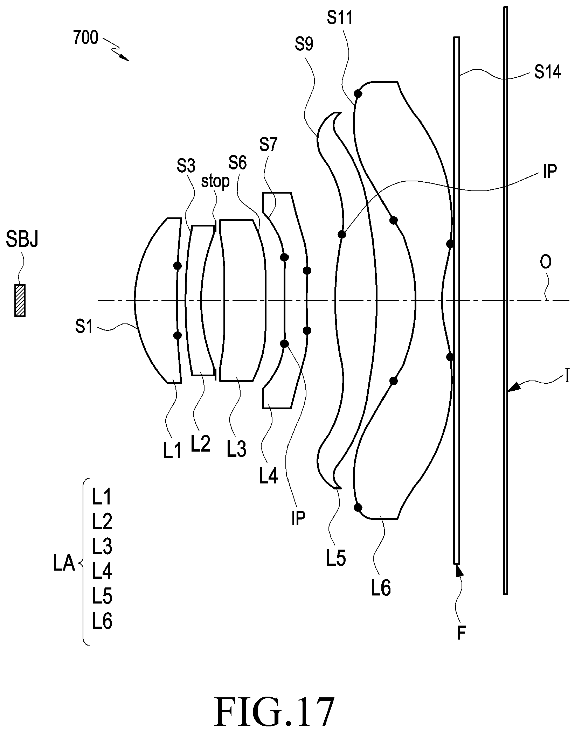

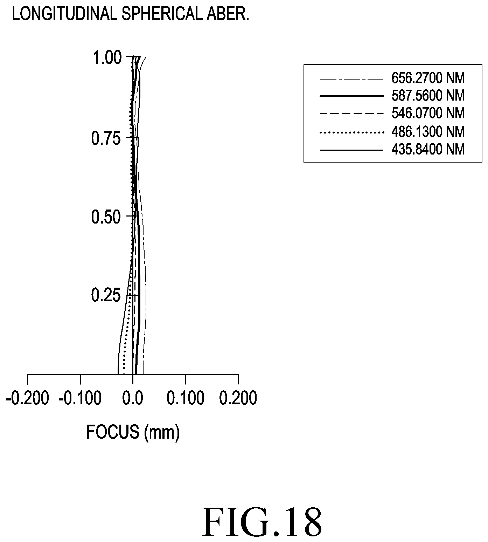

FIG. 17 is a diagram illustrating the image capturing device 700 and/or the lens assembly LA according to an embodiment of the disclosure. FIG. 18 is a graph illustrating spherical aberration of the lens assembly LA of FIG. 17 according to an embodiment of the disclosure.

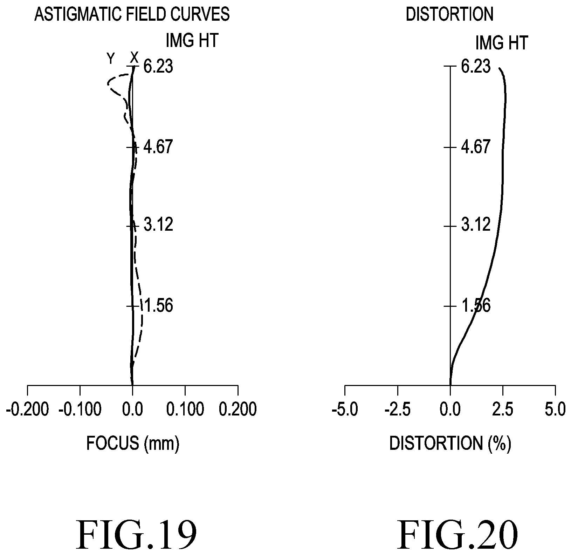

FIG. 19 is a graph illustrating astigmatism of the lens assembly LA of FIG. 17 according to an embodiment of the disclosure. FIG. 20 is a graph illustrating distortion of the lens assembly LA of FIG. 17 according to an embodiment of the disclosure.

The image capturing device 700 of FIG. 17 and/or its lens assembly LA may have a focal length of approximately 6.62mm, and implement a field of view of approximately 84 degrees while having an F-number of approximately 1.79. In an embodiment, the image capturing device 700 and/or its lens assembly LA may satisfy at least some of the above-described condition(s), be manufactured to the specifications illustrated in the following [Table 13], and have the aspherical coefficients of [Table 14], [Table 15], and [Table 16].

[Table 13]

| Lens surface (Surf) | Radius of curvature (Radius) | Thickness or air gap (Thick) | Refractive index (nd) | Abbe number (Vd) |
|---|---|---|---|---|
| SBJ | infinity | 1000 | | |
| S1 | 2.644 | 0.926 | 1.54397 | 55.91 |
| S2 | 12.837 | 0.153 | | |
| S3 | 8.173 | 0.336 | 1.67074 | 19.23 |
| S4(stop) | 4.388 | 0.503 | | |
| S5 | 272.384 | 0.900 | 1.56717 | 37.39 |
| S6 | -25.008 | 0.420 | | |
| S7 | 14.328 | 0.454 | 1.61444 | 25.94 |
| S8 | 8.736 | 0.629 | | |
| S9 | 8.125 | 0.919 | 1.54397 | 55.91 |
| S10 | -4.398 | 0.783 | | |
| S11 | -5.195 | 0.600 | 1.5348 | 55.71 |
| S12 | 3.676 | 0.264 | | |
| S13 | infinity | 0.11 | 1.5168 | 64.17 |
| S14 | infinity | 0.913 | | |

(continued)

| Lens surface (Surf) | Radius of curvature (Radius) | Thickness or air gap (Thick) | Refractive index (nd) | Abbe number (Vd) |
|---|---|---|---|---|
| img | infinity | 0.004 | | |

[Table 14]

| Lens surface (Surf) | 1_ASP | 2_ASP | 3_ASP | 4_ASP |
|---|---|---|---|---|
| Radius of curvature (Radius) | 2.64354E+00 | 1.28367E+01 | 8.17284E+00 | 4.38799E+00 |
| k(Conic) | 3.39044E-01 | -3.27079E+00 | -7.79861E+01 | -9.81196E+00 |
| A(4th)/C4 | -2.75901E-03 | -1.58155E-02 | -1.48024E-02 | -4.83636E-03 |
| B(6th)/C5 | 2.47442E-03 | 9.86164E-03 | 1.19333E-02 | 9.01249E-03 |
| C(8th)/C6 | -3.97218E-03 | -1.52734E-03 | -3.68139E-03 | 7.54035E-03 |
| D(10th)/C7 | 3.70693E-03 | -3.46606E-03 | 1.33662E-03 | -2.61622E-02 |
| E(12th)/C8 | -2.34713E-03 | 3.81723E-03 | -1.26346E-03 | 3.70554E-02 |
| F(14th)/C9 | 9.81455E-04 | -1.99489E-03 | 9.47721E-04 | -3.03199E-02 |
| G(16th)/C10 | -2.62371E-04 | 5.80209E-04 | -3.86589E-04 | 1.45490E-02 |
| H(18th)/C11 | 4.04738E-05 | -8.97831E-05 | 8.25239E-05 | -3.78846E-03 |
| J(20th)/C12 | -2.81498E-06 | 5.73483E-06 | -7.10469E-06 | 4.16494E-04 |
| K(22th)/C13 | 0.00000E+00 | 0.00000E+00 | 0.00000E+00 | 0.00000E+00 |
| L(24th)/C14 | 0.00000E+00 | 0.00000E+00 | 0.00000E+00 | 0.00000E+00 |
| M(26th)/C15 | 0.00000E+00 | 0.00000E+00 | 0.00000E+00 | 0.00000E+00 |
| N(28th)/C16 | 0.00000E+00 | 0.00000E+00 | 0.00000E+00 | 0.00000E+00 |
| O(30th)/C17 | 0.00000E+00 | 0.00000E+00 | 0.00000E+00 | 0.00000E+00 |

[Table 15]

| Lens surface (Surf) | 5_ASP | 6_ASP | 7_ASP | 8_ASP |
|---|---|---|---|---|
| Radius of curvature (Radius) | 2.72384E+02 | -2.50084E+01 | 1.43278E+01 | 8.73610E+00 |
| k(Conic) | 0.00000E+00 | 0.00000E+00 | -2.36290E+01 | -4.77864E+01 |
| A(4th)/C4 | -1.31722E-02 | -2.51771E-02 | -5.91318E-02 | -4.76985E-02 |
| B(6th)/C5 | 7.80702E-05 | 7.83799E-03 | -9.47156E-03 | -4.60745E-03 |
| C(8th)/C6 | -1.38290E-03 | -6.76949E-03 | 6.04467E-02 | 2.48909E-02 |
| D(10th)/C7 | -1.09775E-03 | 4.66102E-03 | -9.32602E-02 | -3.09812E-02 |
| E(12th)/C8 | 4.08393E-03 | -2.73564E-03 | 7.23975E-02 | 2.53835E-02 |
| F(14th)/C9 | -4.80223E-03 | 9.36527E-04 | -1.15801E-02 | -1.46477E-02 |
| G(16th)/C10 | 2.82250E-03 | -1.18014E-04 | -3.39899E-02 | 6.10154E-03 |
| H(18th)/C11 | -8.47687E-04 | -1.48822E-05 | 3.86685E-02 | -1.85405E-03 |
| J(20th)/C12 | 1.06474E-04 | 4.10104E-06 | -2.20782E-02 | 4.12088E-04 |
| K(22th)/C13 | 0.00000E+00 | 0.00000E+00 | 7.88513E-03 | -6.65045E-05 |
| L(24th)/C14 | 0.00000E+00 | 0.00000E+00 | -1.83060E-03 | 7.60996E-06 |
| M(26th)/C15 | 0.00000E+00 | 0.00000E+00 | 2.69487E-04 | -5.86318E-07 |
| N(28th)/C16 | 0.00000E+00 | 0.00000E+00 | -2.29189E-05 | 2.72851E-08 |

(continued)

| Lens surface (Surf) | 5_ASP | 6_ASP | 7_ASP | 8_ASP |
|---|---|---|---|---|
| O(30th)/C17 | 0.00000E+00 | 0.00000E+00 | 8.59291E-07 | -5.78950E-10 |

[Table 16]

| Lens surface (Surf) | 9_ASP | 10_ASP | 11_ASP | 12_ASP |
|---|---|---|---|---|
| Radius of curvature (Radius) | 8.12462E+00 | -4.39783E+00 | -5.19500E+00 | 3.67624E+00 |
| k(Conic) | -3.99049E-01 | -6.05173E+00 | -1.18027E+00 | -8.66824E+00 |
| A(4th)/C4 | 4.01515E-03 | 2.97300E-02 | -1.04202E-02 | -1.80157E-02 |
| B(6th)/C5 | -7.20229E-03 | -1.24522E-02 | -1.16756E-02 | -1.61674E-03 |
| C(8th)/C6 | 2.59791E-03 | 4.18265E-03 | 6.70161E-03 | 2.26651E-03 |
| D(10th)/C7 | -5.83013E-04 | -9.27614E-04 | -1.60239E-03 | -7.94353E-04 |
| E(12th)/C8 | 7.44450E-05 | 1.25022E-04 | 2.02131E-04 | 1.69212E-04 |
| F(14th)/C9 | -5.33692E-06 | -1.02734E-05 | -8.90257E-06 | -2.46914E-05 |
| G(16th)/C10 | 2.08929E-07 | 5.04608E-07 | -1.33564E-06 | 2.55473E-06 |
| H(18th)/C11 | -3.96034E-09 | -1.36182E-08 | 2.85482E-07 | -1.89529E-07 |
| J(20th)/C12 | 2.42797E-11 | 1.55461E-10 | -2.68387E-08 | 1.00758E-08 |
| K(22th)/C13 | 0.00000E+00 | 0.00000E+00 | 1.55434E-09 | -3.79279E-10 |
| L(24th)/C14 | 0.00000E+00 | 0.00000E+00 | -5.85781E-11 | 9.83396E-12 |
| M(26th)/C15 | 0.00000E+00 | 0.00000E+00 | 1.40750E-12 | -1.66382E-13 |
| N(28th)/C16 | 0.00000E+00 | 0.00000E+00 | -1.96710E-14 | 1.64547E-15 |
| O(30th)/C17 | 0.00000E+00 | 0.00000E+00 | 1.22057E-16 | -7.16724E-18 |

Regarding the conditions presented through [Equations 1 to 5] described above, values calculated from the lens data of the image capturing devices 400, 500, 600, and 700 and/or the lens assembly LA of FIG. 5, FIG. 9, FIG. 13, and/or FIG. 17 are illustrated in [Table 17] below.

[Table 17]

|  |  | Embodiment of FIG. 5 | Embodiment of FIG. 9 | Embodiment of FIG. 13 | Embodiment of FIG. 17 |
|---|---|---|---|---|---|
| Equation1 | 5.9mm=<f*tan(semi-FOV) =<6.5mm | 6 | 6 | 5.98 | 6 |
| Equation 2 | 0.55=<OAL/(ImagH*2)=< 0.64 | 0.63 | 0.61 | 0.63 | 0.63 |
| Equation 3 | 1 =< SA/L5S1ape =< 1.4 | 1.17 | 1.14 | 1.17 | 1.17 |
| Equation 4 | 0.2 =< T23/(CT2+CT3) =< 0.5 | 0.39 | 0.35 | 0.37 | 0.41 |
| Equation 5 | 1.7 =< Fno =< 1.9 | 1.88 | 1.88 | 1.88 | 1.79 |

As described above, an image capturing device (e.g., the image capturing device 400, 500, 600, or 700 of FIG. 5, FIG. 9, FIG. 13, and/or FIG. 17) and/or an electronic device (e.g., the electronic device 101, 102, 104, or 300 of FIG. 1, FIG. 3, and/or FIG. 4) including the same according to embodiment(s) of the disclosure may provide optical performance corresponding to a large-sized and/or high-pixel image sensor (e.g., the image sensor I or 230 of FIG. 2, FIG. 5, FIG. 9, FIG. 13, and/or FIG. 17) by satisfying at least one of the conditions described above. In an embodiment, the image capturing device and/or the electronic device including the same may implement a miniaturized optical system using six lenses (e.g., the lenses L1, L2, L3, L4, L5, and L6 of FIG. 5, FIG. 9, FIG. 13, and/or FIG. 17). In an embodiment, at least one of the at least six lenses is disposed to be movable forward and backward in the direction of an optical axis (e.g., the optical axis O FIG. 5, FIG. 9, FIG. 13, and/or FIG. 17), thereby enabling macro photography within a distance of approximately 10cm to telephoto photography.

The effects obtainable from the disclosure are not limited to the effects mentioned above, and other effects not mentioned will be clearly understood by those skilled in the art from the description of the foregoing embodiment(s).

According to an embodiment of the disclosure, an image capturing device (e.g., the image capturing device 400, 500, 600, or 700 of FIG. 5, FIG. 9, FIG, 13, and/or FIG. 17) may include an image sensor (e.g., the image sensor I or 230 of FIG. 5, FIG. 9, FIG, 13, and/or FIG. 17), and a lens assembly (e.g., the lens assembly LA of FIG. 5, FIG. 9, FIG, 13, and/or FIG. 17) configured to focus or guide light to the image sensor by including at least six lenses (e.g., the lenses L1, L2, L3, L4, L5, and L6 of FIG. 5, FIG. 9, FIG, 13, and/or FIG. 17) sequentially aligned along an optical axis (e.g., the optical axis O of FIG. 5, FIG. 9, FIG, 13, and/or FIG. 17) from a first lens (e.g., the first lens L1 of FIG. 5, FIG. 9, FIG, 13, and/or FIG. 17) farthest from the image sensor. In an embodiment, the lens assembly or the at least six lenses may include the first lens having a meniscus shape convex toward a subject side and having a positive refractive power, a second lens (e.g., the second lens L2 of FIG. 5, FIG. 9, FIG, 13, and/or FIG. 17) disposed between the first lens and the image sensor, having a meniscus shape convex toward the subject side, and having a negative refractive power, a third lens (e.g., the third lens L3 of FIG. 5, FIG. 9, FIG, 13, and/or FIG. 17) disposed between the second lens and the image sensor and having a positive refractive power, a fourth lens (e.g., the fourth lens L4 of FIG. 5, FIG. 9, FIG, 13, and/or FIG. 17) disposed between the third lens and the image sensor and having a negative refractive power, a fifth lens (e.g., the fifth lens L5 of FIG. 5, FIG. 9, FIG, 13, and/or FIG. 17) disposed between the fourth lens and the image sensor, having a biconvex shape in a chief region intersecting the optical axis, and having a positive refractive power, and a sixth lens (e.g., the sixth lens L6 of FIG. 5, FIG. 9, FIG, 13, and/or FIG. 17) disposed between the fifth lens and the image sensor and having a negative refractive power. In an embodiment, the lens assembly may satisfy the following [Conditional Expressions 1, 2, and 3].

[Conditional Expression 1]

$$5.9mm =< f*\tan(\text{semi-FOV}) =< 6.5mm$$

[Conditional Expression 2]

$$0.55 =< OAL/(ImgH*2) =< 0.64$$

[Conditional Expression 3]

$$1 =< SA/L5S1ape =< 1.4$$

(where 'f' is a focal length of the lens assembly, 'semi-FOV' is a half field of view of the lens assembly, 'OAL' is a distance from a subject-side surface (e.g., the surface indicated by 'S1' in FIG. 5) of the first lens to the image sensor, measured on the optical axis, 'ImgH' is a maximum image height of the image sensor, and 'SA' is a distance from the subject-side surface of the first lens to a subject-side surface (e.g., the surface indicated by 'S9' in FIG. 5) of the fifth lens, measured on the optical axis, and 'L5S1ape' is a half-aperture size of the subject-side surface of the fifth lens).

According to an embodiment, the lens assembly may satisfy the following [Conditional Expression 4].

[Conditional Expression 4]

$$0.2 =< T23/(CT2+CT3) =< 0.5$$

(where 'T23' is an air gap between the second lens and the third lens, measured on the optical axis, 'CT2' is a thickness of the second lens measured on the optical axis, and 'CT3' is a thickness of the third lens measured on the optical axis).

According to an embodiment, the lens assembly may satisfy the following [Conditional Expression 5].

[Conditional Expression 5]

$$1.7 =< Fno =< 1.9$$

(where 'Fno' is an F-number of the lens assembly).

According to an embodiment, the first lens may include a convex subject-side surface and a sensor-side surface (e.g., the surface indicated by 'S2' in FIG. 5) that is concave in a chief region thereof and convex in a marginal region thereof.

According to an embodiment, the third lens may include a convex sensor-side surface (e.g., the surface indicated by 'S6' in FIG. 5) and have an Abbe number of 40 or more.

According to an embodiment, the third lens may have a meniscus shape convex toward the subject side in a chief region intersecting the optical axis and a meniscus shape convex toward the image sensor in a marginal region around the chief region of the third lens.

According to an embodiment, at least one of the second lens and the fourth lens may have a refractive index of 1.6 or higher.

According to an embodiment, the lens assembly may have a field of view of 80 degrees or more and 100 degrees or less.

According to an embodiment, at least one of a subject-side surface (e.g., the surface indicated by 'S7' in FIG. 5) and a sensor-side surface (e.g., the surface indicated by 'S8' in FIG. 5) of the fourth lens may include at least one inflection point (e.g., the inflection point IP in FIG. 5). According to an embodiment, at least one of the subject-side surface and a sensor-side surface (e.g., the surface indicated by 'S10' in FIG. 5) of the fifth lens may include at least one inflection point. According to an embodiment, at least one of a subject-side surface (e.g., the surface indicated by 'S11' in FIG. 5) and a sensor-side surface (e.g., the surface indicated by 'S12' in FIG. 5) of the sixth lens may include at least one inflection point.

According to an embodiment, a marginal region of the fifth lens may have a meniscus shape convex toward the image sensor, and include an inflection point.

According to an embodiment, the sixth lens may include a subject-side surface having a concave chief region, a convex first part of a marginal region, and a concave second part of the marginal region adjacent to an edge of the sixth lens, and a sensor-side surface having a concave chief region and a convex marginal region.

According to an embodiment, an electronic device (e.g., the electronic device 101, 102, 104, or 300 of FIG. 1, FIG. 3, and/or FIG. 4) may include an image sensor (e.g., the image sensor I or 230 of FIG. 5, FIG. 9, FIG, 13, and/or FIG. 17), a lens assembly (e.g., the lens assembly LA of FIG. 5, FIG. 9, FIG, 13, and/or FIG. 17) configured to focus or guide light to the image sensor by including at least six lenses (e.g., the lenses L1, L2, L3, L4, L5, and L6 of FIG. 5, FIG. 9, FIG, 13, and/or FIG. 17) sequentially aligned along an optical axis (e.g., the optical axis O of FIG. 5, FIG. 9, FIG, 13, and/or FIG. 17) from a first lens (e.g., the first lens L1 of FIG. 5, FIG. 9, FIG, 13, and/or FIG. 17) farthest from the image sensor, and a processor (e.g., the processor 120 of FIG. 1) configured to obtain a subject image using the image sensor. In an embodiment, the lens assembly or the at least six lenses may include the first lens having a meniscus shape convex toward a subject side and having a positive refractive power, a second lens (e.g., the second lens L2 of FIG. 5, FIG. 9, FIG, 13, and/or FIG. 17) disposed between the first lens and the image sensor, having a meniscus shape convex toward the subject side, and having a negative refractive power, a third lens (e.g., the third lens L3 of FIG. 5, FIG. 9, FIG, 13, and/or FIG. 17) disposed between the second lens and the image sensor and having a positive refractive power, a fourth lens (e.g., the fourth lens L4 of FIG. 5, FIG. 9, FIG, 13, and/or FIG. 17) disposed between the third lens and the image sensor and having a negative refractive power, a fifth lens (e.g., the fifth lens L5 of FIG. 5, FIG. 9, FIG, 13, and/or FIG. 17) disposed between the fourth lens and the image sensor, having a biconvex shape in a chief region intersecting the optical axis, and having a positive refractive power, and a sixth lens (e.g., the sixth lens L6 of FIG. 5, FIG. 9, FIG, 13, and/or FIG. 17) disposed between the fifth lens and the image sensor and having a negative refractive power. In an embodiment, the lens assembly may satisfy the following [Conditional Expressions 1, 2, and 3].

$$[\text{Conditional Expression 1}]$$

$$5.9\text{mm} =< f*\tan(\text{semi-FOV}) =< 6.5\text{mm}$$

$$[\text{Conditional Expression 2}]$$

$$0.55 =< \text{OAL}/(\text{ImgH}*2) =< 0.64$$

$$[\text{Conditional Expression 3}]$$

$$1 =< \text{SA}/\text{L5S1ape} =< 1.4$$

(where 'f' is a focal length of the lens assembly, 'semi-FOV' is a half field of view of the lens assembly, 'OAL' is a distance from a subject-side surface (e.g., the surface indicated by 'S1' in FIG. 5) of the first lens to the image sensor, measured on the optical axis, 'ImgH' is a maximum image height of the image sensor, and 'SA' is a distance from the subject-side surface of the first lens to a subject-side surface (e.g., the surface indicated by 'S9' in FIG. 5) of the fifth lens, measured on the optical axis, and 'L5S1ape' is a half-aperture size of the subject-side surface of the fifth lens).

EP 4 783 596 A1

According to an embodiment, the lens assembly may satisfy the following [Conditional Expression 4].

[Conditional Expression 4]

$$0.2 =< T23/(CT2+CT3) =< 0.5$$

(where 'T23' is an air gap between the second lens and the third lens, measured on the optical axis, 'CT2' is a thickness of the second lens measured on the optical axis, and 'CT3' is a thickness of the third lens measured on the optical axis).

According to an embodiment, the lens assembly may satisfy the following [Conditional Expression 5].

[Conditional Expression 5]

$$1.7 =< Fno =< 1.9$$

(where 'Fno' is an F-number of the lens assembly).

According to an embodiment, the first lens may include a convex subject-side surface and a sensor-side surface (e.g., the surface indicated by 'S2' in FIG. 5) that is concave in a chief region thereof and convex in a marginal region thereof.

According to an embodiment, the third lens may have a meniscus shape convex toward the subject side in a chief region intersecting the optical axis and a meniscus shape convex toward the image sensor in a marginal region around the chief region of the third lens.

According to an embodiment, at least one of the second lens and the fourth lens may have a refractive index of 1.6 or higher.

According to an embodiment, at least one of a subject-side surface (e.g., the surface indicated by 'S7' in FIG. 5) and a sensor-side surface (e.g., the surface indicated by 'S8' in FIG. 5) of the fourth lens may include at least one inflection point (e.g., the inflection point IP in FIG. 5). According to an embodiment, at least one of the subject-side surface and a sensor-side surface (e.g., the surface indicated by 'S10' in FIG. 5) of the fifth lens may include at least one inflection point. According to an embodiment, at least one of a subject-side surface (e.g., the surface indicated by 'S11' in FIG. 5) and a sensor-side surface (e.g., the surface indicated by 'S12' in FIG. 5) of the sixth lens may include at least one inflection point.

According to an embodiment, a marginal region of the fifth lens may have a meniscus shape convex toward the image sensor, and include an inflection point.

According to an embodiment, the sixth lens may include a subject-side surface having a concave chief region, a convex first part of a marginal region, and a concave second part of the marginal region adjacent to an edge of the sixth lens, and a sensor-side surface having a concave chief region and a convex marginal region.

While the disclosure has been described with reference to an exemplary embodiment, it should be understood that the embodiment is intended for illustration purposes and does not limit the scope of the disclosure. It will be apparent to those skilled in the art that various changes in form and details may be made without departing from the overall scope of the disclosure, including the appended claims and their equivalents.

**Claims**

1. An image capturing device (180; 280; 305; 312; 313; 400; 500; 600; 700) comprising:

an image sensor (I; 230); and
a lens assembly (LA) configured to focus or guide light to the image sensor by including at least six lenses (L1, L2, L3, L4, L5, L6) sequentially aligned along an optical axis (O) from a first lens (L1) farthest from the image sensor, wherein the lens assembly or the at least six lenses include:

the first lens having a meniscus shape convex toward a subject side and having a positive refractive power;
a second lens (L2) disposed between the first lens and the image sensor, having a meniscus shape convex toward the subject side, and having a negative refractive power;
a third lens (L3) disposed between the second lens and the image sensor and having a positive refractive power;
a fourth lens (L4) disposed between the third lens and the image sensor and having a negative refractive power;
a fifth lens (L5) disposed between the fourth lens and the image sensor, having a biconvex shape in a chief region intersecting the optical axis, and having a positive refractive power; and
a sixth lens (L6) disposed between the fifth lens and the image sensor and having a negative refractive power, and

wherein the lens assembly satisfies the following [Conditional Expressions 1, 2, and 3],

[Conditional Expression 1]

$$5.9mm =< f*\tan(\text{semi-FOV}) =< 6.5mm$$

[Conditional Expression 2]

$$0.55 =< OAL/(ImgH*2) =< 0.64$$

[Conditional Expression 3]

$$1 =< SA/L5S1ape =< 1.4$$

(where 'f' is a focal length of the lens assembly, 'semi-FOV' is a half field of view of the lens assembly, 'OAL' is a distance from a subject-side surface (S1) of the first lens to the image sensor, measured on the optical axis, 'ImgH' is a maximum image height of the image sensor, and 'SA' is a distance from the subject-side surface of the first lens to a subject-side surface (S9) of the fifth lens, measured on the optical axis, and 'L5S1ape' is a half-aperture size of the subject-side surface of the fifth lens).

2. The image capturing device of claim 1, wherein the lens assembly satisfies the following [Conditional Expression 4],

[Conditional Expression 4]

$$0.2 =< T23/(CT2+CT3) =< 0.5$$

(where 'T23' is an air gap between the second lens and the third lens, measured on the optical axis, 'CT2' is a thickness of the second lens measured on the optical axis, and 'CT3' is a thickness of the third lens measured on the optical axis).

3. The image capturing device of claim 1 or 2, wherein the lens assembly satisfies the following [Conditional Expression 5],

[Conditional Expression 5]

$$1.7 =< Fno =< 1.9$$

(where 'Fno' is an F-number of the lens assembly).

4. The image capturing device of any one of claims 1 to 3, wherein the first lens includes a convex subject-side surface and a sensor-side surface (S2) that is concave in a chief region thereof and convex in a marginal region thereof.

5. The image capturing device of any one of claims 1 to 4, wherein the third lens includes a convex sensor-side surface (S6) and has an Abbe number of 40 or more.

6. The image capturing device of any one of claims 1 to 5, wherein the third lens has a meniscus shape convex toward the subject side in a chief region intersecting the optical axis and a meniscus shape convex toward the image sensor in a marginal region around the chief region of the third lens.

7. The image capturing device of any one of claims 1 to 6, wherein at least one of the second lens and the fourth lens has a refractive index of 1.6 or higher.

8.  The image capturing device of claim 7, wherein the lens assembly has a field of view of 80 degrees or more and 100 degrees or less.

9.  The image capturing device of any one of claims 1 to 8, wherein at least one of a subject-side surface (S7) and a sensor-side surface (S8) of the fourth lens includes at least one inflection point (IP), at least one of the subject-side surface and a sensor-side surface (S10) of the fifth lens includes at least one inflection point, and at least one of a subject-side surface (S11) and a sensor-side surface (S12) of the sixth lens includes at least one inflection point.

10. The image capturing device of any one of claims 1 to 8, wherein a marginal region of the fifth lens has a meniscus shape convex toward the image sensor, and includes an inflection point.

11. The image capturing device of any one of claims 1 to 10, wherein the sixth lens includes:

    a subject-side surface having a concave chief region, a convex first part of a marginal region, and a concave second part of the marginal region adjacent to an edge of the sixth lens, and
    a sensor-side surface having a concave chief region and a convex marginal region.

12. An electronic device (101; 102; 104; 300) comprising:

    an image sensor (I; 230);
    the lens assembly LA of any one of claims 1 to 11, configured to focus or guide light to the image sensor by including the at least six lenses (L1, L2, L3, L4, L5, L6) sequentially aligned along the optical axis (O) from the first lens (L1) farthest from the image sensor; and
    a processor (120) configured to obtain a subject image using the image sensor.

13. The electronic device of claim 12, wherein the processor is configured to perform a focus adjustment operation or a focal length adjustment operation by linearly moving at least one of the at least six lenses along a direction of the optical axis.

FIG.1

EP 4 783 596 A1

<u>200</u>

<u>280</u>

CAMERA MODULE

| | 220 |
| FLASH |

| | 260 |
| IMAGE SIGNAL PROCESSOR |

210

LENS ASSEMBLY

230
IMAGE SENSOR

240
IMAGE STABILIZER

250
MEMORY

# FIG.2

FIG.3

FIG.4

FIG.5

LONGITUDINAL SPHERICAL ABER.

| | 656.2700 NM |
|---|---|
| | 587.5600 NM |
| | 546.0700 NM |
| | 486.1300 NM |
| | 435.8400 NM |

FOCUS (mm)

# FIG.6

ASTIGMATIC FIELD CURVES

IMG HT

6.23

4.67

3.12

1.56

-0.200 -0.100 0.0 0.100 0.200

FOCUS (mm)

DISTORTION

IMG HT

6.23

4.67

3.12

1.56

-5.0 -2.5 0.0 2.5 5.0

DISTORTION (%)

# FIG.7

# FIG.8

FIG.9

LONGITUDINAL SPHERICAL ABER.

| | |
|---|---|
| —— · —— · —— | 656.2700 NM |
| —————— | 587.5600 NM |
| — — — — — | 546.0700 NM |
| · · · · · · · · · | 486.1300 NM |
| —————— | 435.8400 NM |

FOCUS (mm)

FIG.10

ASTIGMATIC FIELD CURVES

DISTORTION

IMG HT

IMG HT

T    S  6.23

6.23

4.67

4.67

3.12

3.12

1.56

1.56

-0.200  -0.100   0.0   0.100  0.200

-5.0    -2.5    0.0    2.5    5.0

FOCUS (mm)

DISTORTION (%)

# FIG.11

# FIG.12

FIG.13

LONGITUDINAL SPHERICAL ABER.

| | |
|---|---|
| —·—·— | 656.2700 NM |
| ⸺ | 587.5600 NM |
| ‑ ‑ ‑ ‑ | 546.0700 NM |
| ·········· | 486.1300 NM |
| ⸺ | 435.8400 NM |

FOCUS (mm)

FIG.14

ASTIGMATIC FIELD CURVES

DISTORTION

FIG.15

FIG.16

**FIG.17**

LONGITUDINAL SPHERICAL ABER.

FIG.18

ASTIGMATIC FIELD CURVES

IMG HT

Y X 6.23

4.67

3.12

1.56

-0.200 -0.100 0.0 0.100 0.200

FOCUS (mm)

**FIG.19**

DISTORTION

IMG HT

6.23

4.67

3.12

1.56

-5.0 -2.5 0.0 2.5 5.0

DISTORTION (%)

**FIG.20**

## INTERNATIONAL SEARCH REPORT

| | International application No. |
|---|---|
| | **PCT/KR2024/014177** |

| A. | CLASSIFICATION OF SUBJECT MATTER |
|---|---|
| | **H04N 23/55**(2023.01)i; **H04N 23/54**(2023.01)i; **G03B 17/12**(2006.01)i; **G02B 13/00**(2006.01)i; **G02B 15/14**(2006.01)i |

According to International Patent Classification (IPC) or to both national classification and IPC

| B. | FIELDS SEARCHED |
|---|---|

Minimum documentation searched (classification system followed by classification symbols)

H04N 23/55(2023.01); G02B 11/32(2006.01); G02B 13/00(2006.01); G02B 13/18(2006.01); G02B 9/62(2006.01); G02B 9/64(2006.01); H04N 5/225(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 렌즈 조립체(lens assembly), 이미지 센서(image sensor), 초점 거리(focal length), 반화각(half angle of view), 최대 상고(maximum image height), 전체 길이(overall length), 전장(total length)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2015-0070858 A (SAMSUNG ELECTRONICS CO., LTD.) 25 June 2015 (2015-06-25)<br>See claims 1-18; and figure 1. | 1-13 |
| A | US 2018-0356613 A1 (LARGAN PRECISION CO., LTD.) 13 December 2018 (2018-12-13)<br>See paragraphs [0064]-[0098]; and figure 1. | 1-13 |
| A | US 2021-0149155 A1 (LARGAN PRECISION CO., LTD.) 20 May 2021 (2021-05-20)<br>See paragraphs [0082]-[0128]; and figure 1. | 1-13 |
| A | US 2021-0373284 A1 (LARGAN PRECISION CO., LTD.) 02 December 2021 (2021-12-02)<br>See paragraphs [0091]-[0110]; and figure 1. | 1-13 |
| A | JP 2019-191523 A (TAMRON CO., LTD.) 31 October 2019 (2019-10-31)<br>See paragraphs [0009]-[0011]; and figure 1. | 1-13 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 December 2024** | **24 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
|---|
| **PCT/KR2024/014177** |

| Patent document cited in search report | | | Publication date (day/month/year) | Patent family member(s) | | | Publication date (day/month/year) |
|---|---|---|---|---|---|---|---|
| KR | 10-2015-0070858 | A | 25 June 2015 | KR | 10-2180476 | B1 | 18 November 2020 |
| | | | | US | 2015-0168677 | A1 | 18 June 2015 |
| | | | | US | 9547151 | B2 | 17 January 2017 |
| US | 2018-0356613 | A1 | 13 December 2018 | CN | 109001888 | A | 14 December 2018 |
| | | | | CN | 109001888 | B | 08 September 2020 |
| | | | | TW | 201903460 | A | 16 January 2019 |
| | | | | TW | I620957 | B | 11 April 2018 |
| | | | | US | 10175454 | B2 | 08 January 2019 |
| US | 2021-0149155 | A1 | 20 May 2021 | BR | 102018069616 | A2 | 10 September 2019 |
| | | | | CN | 110187469 | A | 30 August 2019 |
| | | | | CN | 110187469 | B | 17 August 2021 |
| | | | | KR | 10-2113532 | B1 | 22 May 2020 |
| | | | | TW | 201937226 | A | 16 September 2019 |
| | | | | TW | I651565 | B | 21 February 2019 |
| | | | | US | 10914919 | B2 | 09 February 2021 |
| | | | | US | 11709338 | B2 | 25 July 2023 |
| | | | | US | 11994748 | B2 | 28 May 2024 |
| | | | | US | 2019-0258028 | A1 | 22 August 2019 |
| | | | | US | 2023-0305269 | A1 | 28 September 2023 |
| US | 2021-0373284 | A1 | 02 December 2021 | CN | 113741000 | A | 03 December 2021 |
| | | | | CN | 113741000 | B | 01 August 2023 |
| | | | | TW | 202144844 | A | 01 December 2021 |
| | | | | TW | I726734 | B | 01 May 2021 |
| | | | | US | 11982875 | B2 | 14 May 2024 |
| JP | 2019-191523 | A | 31 October 2019 | JP | 7063711 | B2 | 09 May 2022 |

Form PCT/ISA/210 (patent family annex) (July 2022)